(19) Europäisches Patentamt European Patent Office Office européen des brevets

(11) **EP 4 535 110 A1**

(12) **EUROPEAN PATENT APPLICATION**
published in accordance with Art. 153(4) EPC

(43) Date of publication:
**09.04.2025 Bulletin 2025/15**

(21) Application number: **23815687.1**

(22) Date of filing: **08.05.2023**

(51) International Patent Classification (IPC):
**G05B 23/02** (2006.01)

(52) Cooperative Patent Classification (CPC):
**G05B 23/02**

(86) International application number:
**PCT/JP2023/017280**

(87) International publication number:
**WO 2023/233926 (07.12.2023 Gazette 2023/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **03.06.2022 JP 2022090862**
**31.03.2023 JP 2023058311**

(71) Applicant: **OMRON Corporation**
**Kyoto 600-8530 (JP)**

(72) Inventors:
• **NAMOSE, Isamu**
**Kyoto-shi, Kyoto 600-8530 (JP)**
• **KAWASAKI, Susumu**
**Kyoto-shi, Kyoto 600-8530 (JP)**

(74) Representative: **Mewburn Ellis LLP**
**Aurora Building**
**Counterslip**
**Bristol BS1 6BX (GB)**

(54) **ABNORMALITY SIGN DETECTION DEVICE, DETECTION METHOD OF ABNORMALITY SIGN, AND PROGRAM**

(57) A detection method comprises: acquiring measured values of a plurality of parameters indicating a state of a production system; calculating a first statistic representing a similarity of the measured values to standard values of the plurality of parameters; selecting from the plurality of parameters a plurality of effective parameters effective in improving estimation accuracy of a T-method estimation model in which the plurality of parameters are explanatory variables and the first statistic is an objective variable; calculating a second statistic representing a similarity of measured values of the plurality of effective parameters to standard values of the plurality of effective parameters; and detecting a predictive anomaly of the production system based on a result of comparing the second statistic with a control range.

FIG.1

**Description**

TECHNICAL FIELD

The present disclosure relates to a predictive anomaly detection device, a predictive anomaly detection method, and a program.

BACKGROUND ART

In order to improve production efficiency, it is desirable to detect predictive anomalies of production systems at an early stage. Japanese Patent Laying-Open No. 2019-177783 (PTL 1) discloses a technique for detecting deterioration of ride comfort of railroad vehicles from an increase in Mahalanobis' distance between characteristic data obtained from an acceleration sensor provided on the railroad vehicle and previously acquired unit data.

CITATION LIST

PATENT LITERATURE

PTL 1: Japanese Patent Application Laying-Open No. 2019-177783

NON PATENT LITERATURE

NPL 1: Kishio TAMURA, "Chapter 5. MT system capable of determining directions - TS method and T method," Standardization and Quality Control, 2009, Vol. 62, No. 2
NPL 2: Genichi TAGUCHI, " Objective Function and Generic Function (6) - Prediction by T Method", Quality Engineering, 2005, Vol. 13, No. 3, pp. 5-10
NPL 3: "Idea and Utilization of Quality Engineering in Development and Design Phase - Prototypeless and Testless System Evaluation and Improvement," [online], [searched on March 22, 2023], Internet <https://foundry.jp/bukai/wp-content/uploads/2012/07/e4806f10b0797ec0932d9317dd92a533.pdf>

SUMMARY OF INVENTION

TECHNICAL PROBLEM

The technique described in Japanese Patent Application Laying-Open No. 2019-177783 (PTL 1) may be applied to a production system. However, many noise factors may be included in the data obtained from the production system. Therefore, high accuracy cannot be achieved through predictive anomaly detection using the data. Therefore, conventionally, it is necessary to screen data by an expert through his/her experience and knowledge.

The present disclosure has been made in view of the above issue and contemplates a predictive anomaly detection device, a predictive anomaly detection method, and a program capable of accurately detecting a predictive anomaly of a target to be monitored without relying on a particular person's experience.

SOLUTION TO PROBLEM

According to one example of the present disclosure, a predictive anomaly detection device comprises an acquisition unit, a first calculation unit, a selection unit, a second calculation unit, and a detection unit. The acquisition unit is configured to acquire, for each unit interval, measured values of a plurality of parameters indicating a state of a target to be monitored in the unit interval. The first calculation unit is configured to calculate a first statistic representing a similarity of the measured values of the plurality of parameters to standard values of the plurality of parameters acquired while the target to be monitored normally operates. The selection unit is configured to select, from the plurality of parameters, a plurality of effective parameters effective in improving estimation accuracy of a T-method estimation model in which the plurality of parameters are explanatory variables and the first statistic is an objective variable. The second calculation unit is configured to calculate a second statistic representing a similarity of measured values of the plurality of effective parameters to standard values of the plurality of effective parameters. The detection unit is configured to detect a predictive anomaly of the target to be monitored based on a result of comparing the second statistic with a control range.

According to the above disclosure, the plurality of effective parameters have a larger degree of influence on the first statistic than the remaining parameters do. This means that the effective parameters include a noise factor at a smaller proportion than the remaining parameters do. The second statistic calculated using such a plurality of effective parameters accurately represents similarity for a state that the target to be monitored has when it normally operates. The plurality of effective parameters are selected based on estimation accuracy of the T-method estimation model in which the plurality of parameters are explanatory variables and the first statistic is an objective variable. Thus, a plurality of effective parameters that accurately represent similarity for the state that the target to be monitored has when it normally operates are selected without relying on a particular person's experience. The predictive anomaly detection device can thus accurately detect a predictive anomaly of the target to be monitored without relying on a particular person's experience.

In the above disclosure, the acquisition unit is further configured to acquire, for each unit interval, event information indicating a type of an event occurring in the target to be monitored in the unit interval. The second calculation unit is configured to provide a graph representing how the second statistic, as calculated for each unit interval, varies with time, and to indicate in the graph a type of an event indicated by the event information for each unit interval.

According to the above disclosure, the user can confirm the graph to find a type of an event occurring at a timing when the second statistic varies and facilitate identifying a cause of an anomaly.

In the above disclosure, the predictive anomaly detection device further comprises an analysis unit configured to perform a principal component analysis using the plurality of effective parameters and the second statistic for each unit interval and provide a result of the analysis.

According to the above disclosure, the user can confirm the result of the analysis to facilitate identifying a cause of an anomaly.

In the above disclosure, the result of the analysis includes a scatter diagram of principal component scores of a first principal component and a second principal component for each unit interval. A vector indicating a principal component loading in each of the plurality of effective parameters and the second statistic is superimposed and displayed on the scatter diagram.

According to the above disclosure, the user can determine that, of the plurality of effective parameters, an effective parameter having a relatively large component parallel to the direction of the vector of the second statistic is relevant to an anomaly. The user is thus helped to identify a cause of the anomaly based on the effective parameter relevant to the anomaly.

In the above disclosure, the acquisition unit is further configured to acquire event information indicating a type of an event occurring in the target to be monitored in the unit interval. The scatter diagram presents a point in a form different depending on a type of an event indicated by the event information of the unit interval corresponding to the point.

According to the above disclosure, the user can find a type of an event concentrated in the direction of the vector of the effective parameter relevant to the anomaly, and the user is thus helped to identify a cause of the anomaly.

In the above disclosure, the selection unit is configured to provide a coefficient of determination for a T-method estimation model in which the plurality of effective parameters are explanatory variables and the second statistic is an objective variable.

According to the above disclosure, the user can determine whether the plurality of effective parameters are effective based on the coefficient of determination.

In the above disclosure, the first statistic and the second statistic are each a standard SN ratio. This qualifies the first statistic and the second statistic to represent the similarity of the measured values to the standard values.

In the above disclosure, the unit interval has a predetermined time length. Alternatively, the target to be monitored repeatedly performs a target operation. The unit interval is a period of time for which the target operation is performed.

In the above disclosure, the target to be monitored includes a manufacturing apparatus. The plurality of parameters are extracted from a waveform of vibration measured by an acceleration sensor installed for the manufacturing apparatus.

A waveform of vibration measured by an acceleration sensor tends to include a noise factor in a large amount. However, according to the above disclosure, a plurality of effective parameters including a noise factor at a relatively small proportion are selected from a plurality of parameters extracted from a vibration waveform. Using such a plurality of effective parameters allows a predictive anomaly to be accurately detected.

According to another example of the present disclosure, a method for detecting a predictive anomaly comprises first to fifth steps. The first step is a step of acquiring, for each unit interval, measured values of a plurality of parameters indicating a state of a target to be monitored in the unit interval. The second step is a step of calculating a first statistic representing a similarity of the measured values of the plurality of parameters to standard values of the plurality of parameters acquired while the target to be monitored normally operates. The third step is a step of selecting, from the plurality of parameters, a plurality of effective parameters effective in improving estimation accuracy of a T-method estimation model in which the plurality of parameters are explanatory variables and the first statistic is an objective variable. The fourth step is a step of calculating a second statistic representing a similarity of measured values of the plurality of effective parameters to standard values of the plurality of effective parameters. The fifth step is a step of detecting a predictive anomaly of the target to be monitored based on a result of comparing the second statistic with a control range.

According to another example of the present disclosure, a program causes a computer to perform the method for detecting a predictive anomaly. According to these disclosures as well, the predictive anomaly detection method or program allows accurate and stable detection of a predictive anomaly of a target to be monitored without relying on a particular person's experience.

ADVANTAGEOUS EFFECTS OF INVENTION

According to the present disclosure, the predictive anomaly detection device, the predictive anomaly detection method, or the program can accurately and stably detect a predictive anomaly of a production system without relying on a particular person's experience.

BRIEF DESCRIPTION OF DRAWINGS

Fig. 1 is a schematic diagram of a method for detecting a predictive anomaly according to an embodiment.
Fig. 2 is a schematic diagram of a general configuration of a system including a predictive anomaly detection device according to an embodiment.
Fig. 3 is a schematic diagram of an example of a hardware configuration of the predictive anomaly detection device according to an embodiment.
Fig. 4 is a diagram of an example of a functional configuration of the predictive anomaly detection device according to an embodiment.
Fig. 5 is a diagram of an example of a database included in a storage unit.
Fig. 6 represents an example of a degree of contribution of each parameter to a first standard SN ratio in a T-method estimation model with a plurality of parameters all used.
Fig. 7 represents an example of a plurality of effective parameters selected by a selection unit.
Fig. 8 is a flowchart of an example of a flow of a process performed by the predictive anomaly detection device.
Fig. 9 represents an example of a scatter diagram of estimated and measured values of an objective variable when the T-method estimation model is used with the plurality of parameters all as explanatory variables and the first standard SN ratio as the objective variable.
Fig. 10 represents an example of a scatter diagram of estimated and measured values of an objective variable when the T-method estimation model is used with the plurality of effective parameters as explanatory variables and the first standard SN ratio as the objective variable.
Fig. 11 represents an example of how the first standard SN ratio changes with time.
Fig. 12 represents an example of how a second standard SN ratio changes with time.
Fig. 13 represents an example of an analysis result provided in step S22.
Fig. 14 is a diagram illustrating an example of operating the predictive anomaly detection device.
Fig. 15 is a diagram illustrating another example of a target to be monitored.
Fig. 16 represents transition of a physical quantity measured by a sensor group for a period of time for which an injection molding operation is performed.
Fig. 17 represents standard values and measured values of a plurality of parameters indicating a status of an injection molding machine.
Fig. 18 represents transition of a second statistic calculated for each injection molding operation.
Fig. 19 represents a result of a principal component analysis using a plurality of effective parameters and a second standard SN ratio for each injection molding operation.
Fig. 20 is a diagram illustrating still another example of a target to be monitored.
Fig. 21 represents transition of a second statistic calculated for each bonding operation.

DESCRIPTION OF EMBODIMENTS

Embodiments of the present invention will now be described in detail with reference to the drawings. In the figures, identical or equivalent components are identically denoted and will not be described repeatedly.

§ 1. Exemplary Application

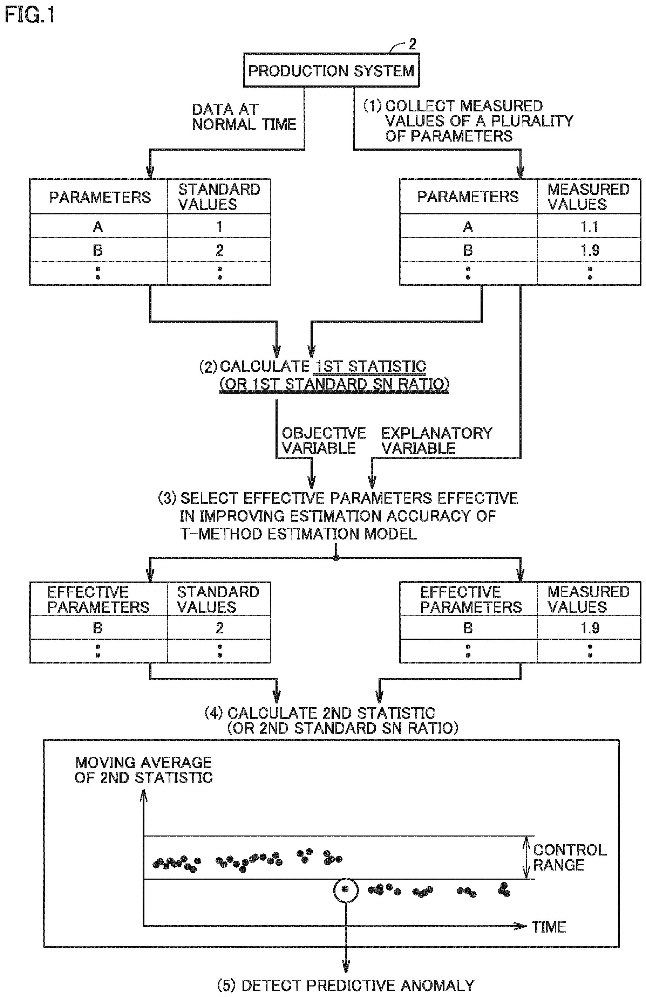

An example of a scene in which the present invention is applied will be described with reference to Fig. 1. Fig. 1 is a schematic diagram of a predictive anomaly detection method according to an embodiment. As shown in Fig. 1, the detection method comprises steps (1) to (5). Fig. 1 shows a detection method in which a production system 2 is an example of a target to be monitored for a predictive anomaly. The target to be monitored is not limited to production system 2.

Step (1) is a step of acquiring, for each unit period of time, measured values of a plurality of parameters indicating a state of production system 2 for the unit period of time. The plurality of parameters indicate, for example, a state of a manufacturing apparatus included in production system 2, quality of an intermediate product or a final product manufactured in production system 2, and the like.

Step (2) is a step of calculating a first statistic representing a similarity of the measured values of the plurality of parameters to standard values of the plurality of parameters acquired while production system 2 normally operates. Hereinafter, an example in which a first standard SN ratio is calculated as the first statistic will be described. Note, however, that the first statistic is not limited to the first standard SN ratio, and may be a parameter indicating a similarity between standard values and actual values for a plurality of variables. The first standard SN ratio represents a similarity to a first reference space defined by the standard values of the plurality of parameters. The standard values of the plurality of parameters acquired while production system 2 normally operates are acquired in advance from production system 2.

Step (3) is a step of selecting, from the plurality of parameters, a plurality of effective parameters effective in improving estimation accuracy of a T-method estimation model in which the plurality of parameters are explanatory variables and the first standard SN ratio is an objective variable. A plurality of effective parameters having a relatively large degree of influence on the objective variable or the first standard SN ratio can thus be selected.

Step (4) is a step of calculating a second statistic representing a similarity of measured values of the plurality of effective parameters to standard values of the plurality of effective parameters. Hereinafter, an example in which a second standard SN ratio is calculated as the second statistic will be described. Note, however, that the second statistic is not limited to the second standard SN ratio, and may be a parameter indicating a similarity between standard values and actual values for a plurality of variables. The second standard SN ratio represents a similarity to a second reference space defined by the standard values of the plurality of effective parameters. The second standard SN ratio is calculated whenever a measured value is acquired.

Step (5) detects a predictive anomaly of production system 2 based on a result of comparing the second standard SN ratio with a control range. For example, the predictive anomaly of production system 2 is detected in response to the second standard SN ratio having a moving average departing from the control range. The predictive anomaly of production system 2 includes a predictive anomaly of a manufacturing apparatus included in production system 2, a predictive anomaly in quality of an intermediate product or a final product manufactured in production system 2, and the like.

The plurality of effective parameters have a larger degree of influence on the first standard SN ratio than the remaining parameters do. This means that the effective parameters include a noise factor at a smaller proportion than the remaining parameters do. When such a plurality of effective parameters is used to calculate a second standard SN ratio, the second standard SN ratio accurately represents similarity for a state that production system 2 has when it normally operates.

The plurality of effective parameters are selected based on estimation accuracy of the T-method estimation model in which the plurality of parameters are explanatory variables and the first standard SN ratio is an objective variable. Therefore, a plurality of effective parameters that accurately represent similarity for the state that production system 2 has when it normally operates are selected without relying on a particular person's experience.

Thus, the predictive anomaly detection method of the present embodiment can accurately detect a predictive anomaly of production system 2 without relying on a particular person's experience.

§ 2. Specific Example

<System Configuration>

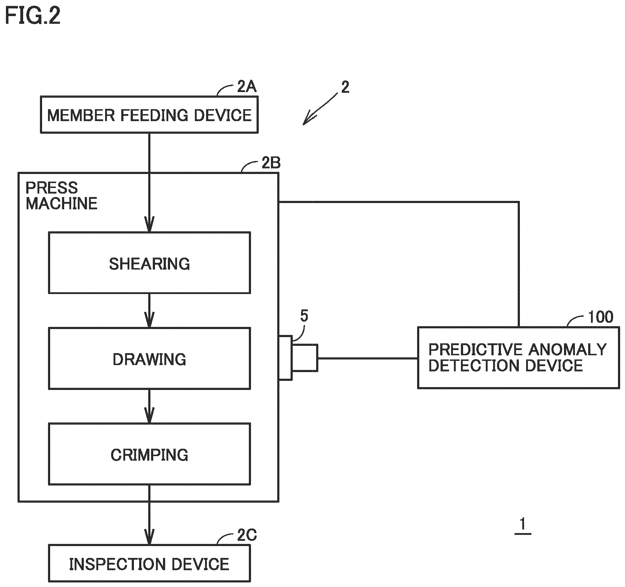

Fig. 2 is a schematic diagram of a general configuration of a system including a predictive anomaly detection device according to an embodiment. As illustrated in Fig. 2, a system 1 comprises production system 2 and a predictive anomaly detection device 100.

Production system 2 includes a member feeding device 2A, a press machine 2B, and an inspection device 2C. Member feeding device 2A feeds press machine 2B with a metal member. Press machine 2B is a manufacturing apparatus that shears, draws and crimps the metal member to manufacture a product having a predetermined shape. Inspection device 2C inspects the product in appearance, performance, etc.

Press machine 2B is provided with an acceleration sensor 5. Acceleration sensor 5 measures a waveform of vibration caused in press machine 2B and outputs a measurement signal indicating a measurement result.

When an event occurs in any of shearing, drawing, and crimping, press machine 2B in response outputs an event signal. The event is, for example, a failure that causes a temporary halt of press machine 2B. The event signal indicates in which of the shearing, the drawing or the crimping the event has occurred.

Predictive anomaly detection device 100 performs the predictive anomaly detection method described above.

Specifically, predictive anomaly detection device 100 detects a predictive anomaly of press machine 2B using measured values of a plurality of parameters acquired from a waveform of vibration measured by acceleration sensor 5. Predictive anomaly detection device 100 for example includes a programmable logic controller (PLC) or a general-purpose computer.

Further, when predictive anomaly detection device 100 detects the predictive anomaly of press machine 2B, the predictive anomaly detection device provides assistive information for assisting in identifying a cause of the anomaly. For example, predictive anomaly detection device 100 produces assistive information based on an event signal output from press machine 2B.

Predictive anomaly detection device 100 may directly receive the event signal from press machine 2B, or may receive the event signal from press machine 2B via a device (e.g., the PLC) (not shown).

<Hardware Configuration of Predictive Anomaly Detection Device>

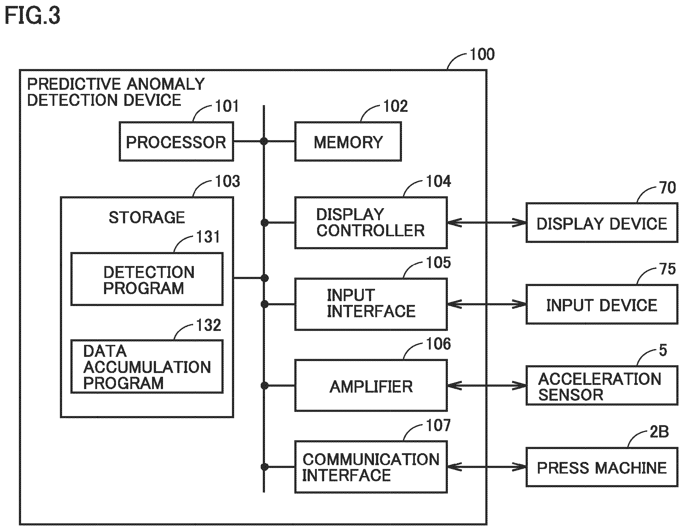

Fig. 3 is a schematic diagram of an example of a hardware configuration of the predictive anomaly detection device according to an embodiment. As shown in Fig. 3, predictive anomaly detection device 100 typically has a structure conforming to a general-purpose computer architecture. Specifically, predictive anomaly detection device 100 includes a processor 101 such as a central processing unit (CPU) or a micro-processing unit (MPU), a memory 102, a storage 103, a display controller 104, an input interface 105, an amplifier 106, and a communication interface 107. These units are interconnected via a bus to be able to communicate data with one another.

Processor 101 implements a variety of types of processes according to the present embodiment by loading a variety of types of programs stored in storage 103 into memory 102 and executing the programs.

Memory 102 is typically a volatile storage device such as DRAM (Dynamic Random Access Memory), and stores a program read from storage 103, a variety of types of data generated as the program is executed, and the like.

Storage 103 is typically a non-volatile magnetic storage device such as a hard disk drive. Storage 103 stores a detection program 131 and a data accumulation program 132 executed by processor 101. A variety of types of programs installed in storage 103 are distributed in a state of being stored in a memory card or the like.

Storage 103 may further store a variety of types of data generated as detection program 131 and data accumulation program 132 are executed.

Display controller 104 is connected to a display device 70, and, in response to an internal command received from processor 101, outputs a signal to display device 70 for displaying a variety of types of information.

Input interface 105 mediates data transmission between processor 101 and an input device 75, such as a keyboard, a mouse, a touch panel, a dedicated console, etc. That is, input interface 105 receives an instruction entered by a user operating input device 75.

Amplifier 106 amplifies a measurement signal received from acceleration sensor 5. Communication interface 107 mediates data transmission between processor 101 and an external device (e.g., press machine 2B). Communication interface 107 typically includes Ethernet®, a USB (Universal Serial Bus), or the like. Note that a variety of types of programs stored in storage 103 may be downloaded from a distribution server or the like via communication interface 107.

When a computer having a structure conforming to a general-purpose computer architecture, as described above, is used, an OS (Operating System) for providing basic functions for the computer may be installed in addition to an application provided for providing functions according to the present embodiment. In that case, a program according to the present embodiment may invoke necessary ones of program modules that are provided as a part of the OS in a predetermined order at a predetermined timing and perform processing. That is, the program per se according to the present embodiment may not include the above-described modules, and instead cooperate with the OS to perform the processing.

Alternatively, functions provided by executing detection program 131 and data accumulation program 132 may be partially or entirely implemented as dedicated hardware circuitry.

<Functional Configuration of Predictive Anomaly Detection Device>

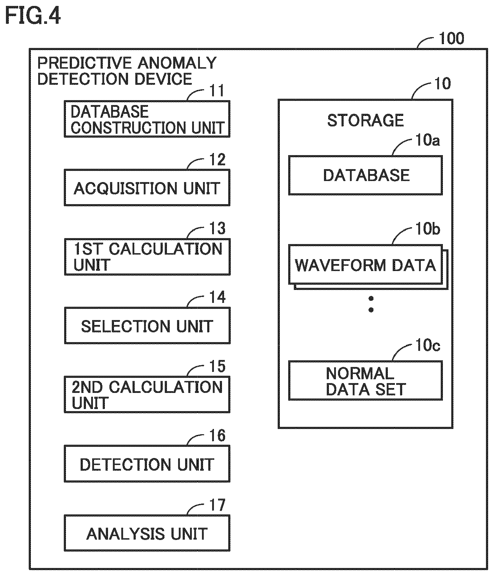

Fig. 4 is a diagram of an example of a functional configuration of the predictive anomaly detection device according to an embodiment. As illustrated in Fig. 4, predictive anomaly detection device 100 comprises a storage unit 10, a database construction unit 11, an acquisition unit 12, a first calculation unit 13, a selection unit 14, a second calculation unit 15, a detection unit 16, and an analysis unit 17. Storage unit 10 is implemented by memory 102 and storage 103. Database construction unit 11 is implemented by amplifier 106, communication interface 107, and processor 101 executing data accumulation program 132. Acquisition unit 12, first calculation unit 13, selection unit 14, second calculation unit 15, detection unit 16, and analysis unit 17 are implemented by processor 101 executing detection program 131.

Database construction unit 11 constructs a database 10a included in storage unit 10 based on a measurement signal received from acceleration sensor 5 and an event signal received from press machine 2B.

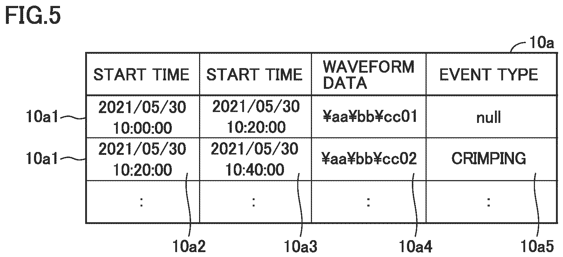

Fig. 5 is a diagram of an example of the database included in the storage unit. As shown in Fig. 5, database 10a has a table format and includes one or more records 10a1.

Record 10a1 is added for each unit period of time having a predetermined time length (e.g., 1 minute, 5 minutes, 20 minutes, etc.). Each record 10a1 includes fields 10a2 to 10a5. In field 10a2 is described the start time of the corresponding unit period of time. In field 10a3 is described the end time of the corresponding unit period of time. In field 10a4 is described a location in which waveform data 10b representing a waveform of vibration as measured by acceleration sensor 5 during the corresponding unit period of time is stored. In field 10a5 is described a type of event (any one of a "shearing event", a "drawing event" and a "crimping event") indicated by an event signal received during the corresponding unit period of time.

Whenever any unit period of time ends, database construction unit 11 adds a new record 10a1 to database 10a. Database construction unit 11 describes in the new record 10a1 at fields 10a2 and 10a3 the start time and the end time, respectively, of the corresponding unit period of time.

Whenever any unit period of time ends, database construction unit 11 generates waveform data 10b indicative of a waveform of vibration measured by acceleration sensor 5 during the unit period of time, and stores the generated waveform data 10b in storage unit 10. Database construction unit 11 describes in field 10a4 of the new record 10a1 added for the unit period of time a location in which the generated waveform data 10b is stored. For example, the location in which waveform data 10b is stored is indicated by a folder name and a file name.

When the unit period of time ends, database construction unit 11 determines whether an event signal has been received during the unit period of time. When no event signal is received, database construction unit 11 describes "null" in field 10a5 of the new record 10a1 added for the unit period of time. When an event signal is received, database construction unit 11 describes in field 10a5 of the new record 10a1 added for the unit period of time the type of the event indicated by the event signal.

Acquisition unit 12 indicated in Fig. 4 acquires, for each unit period of time, measured values of a plurality of parameters indicating a state that press machine 2B has for the unit period of time. Specifically, acquisition unit 12 determines, for each unit period of time, the record 10a1 that corresponds to the unit period of time from database 10a, and reads waveform data 10b stored in a storage location described in the determined record 10a1 at field 10a4. Acquisition unit 12 calculates measured values of a plurality of parameters representing a feature of a vibration waveform indicated by the read waveform data 10b. The plurality of parameters indicate, for example, information on each frequency component of the vibration waveform.

Further, acquisition unit 12 acquires, for each unit period of time, event information indicating a type of an event occurring in press machine 2B of production system 2 for the unit period of time. Specifically, acquisition unit 12 determines, for each unit period of time, the record 10a1 that corresponds to the unit period of time from database 10a, and acquires event information indicating a type of an event described in the determined record 10a1 at field 10a5.

First calculation unit 13 calculates, for each unit period of time, a first standard SN ratio for the measured values of the plurality of parameters with respect to standard values of the plurality of parameters acquired while press machine 2B normally operates. The first standard SN ratio is calculated based on "Idea and Utilization of Quality Engineering in Development and Design Phase - Prototypeless and Testless System Evaluation and Improvement," [online], [searched on January 4, 2022], Internet <https://foundry.jp/bukai/wp-content/uploads/2012/07/e4806f10b0797ec0932d9317d d92a533.pdf> (NPL 3). The standard values of the plurality of parameters acquired while press machine 2B normally operates are indicated by a normal data set 10c stored in storage unit 10. Normal data set 10c is created in advance.

Selection unit 14 selects, from the plurality of parameters, a plurality of effective parameters effective in improving estimation accuracy of a T-method estimation model in which the plurality of parameters are explanatory variables and the first standard SN ratio is an objective variable.

The T-method is one of the multivariate analysis methods provided by a Statistician Dr. Genich Taguchi, and is a method of estimating a value of one objective variable from values of a plurality of explanatory variables (See Kishio TAMURA, "Chapter 5. MT system capable of determining directions - TS method and T method," Standardization and Quality Control, 2009, Vol. 62, No. 2 (NPL 1)).

Selection unit 14 generates a T-method estimation model by subjecting to data processing in the T-method a data set indicative of the measured values of the plurality of parameters and the value of the first standard SN ratio for each unit period of time. In the data processing in the T method, a simple regression is performed for each explanatory variable and weighted averaging is performed for each explanatory variable to generate a T method estimation model to calculate an estimated value of an objective variable. The estimation model obtained through the data processing in the T method is represented by the following expression (1).

[Math. 1]

$$M_i = \left(\frac{\eta_1}{\beta_1 \sum_{j=1}^{k} \eta_j}\right) X_{i1} + \left(\frac{\eta_2}{\beta_2 \sum_{j=1}^{k} \eta_j}\right) X_{i2} + \cdots + \left(\frac{\eta_k}{\beta_k \sum_{j=1}^{k} \eta_j}\right) X_{ik} \quad (1)$$

In expression (1), $X_{ij}$ is a value after a j-th explanatory variable for an i-th unit period of time is standardized. Standardization is a process of subtracting an average value of measured values of a parameter indicated by a data set. $\eta_j$ represents an SN ratio for the j-th explanatory variable. SN ratio $\eta_j$ indicates linearity between the value of the j-th explanatory variable and the value of the objective variable, and represents accuracy of estimation of the value of the objective variable. $\beta_j$ represents a constant of proportionality for a simple regression. $M_i$ is an estimated value after an objective variable for the i-th unit period of time is standardized.

For example, selection unit 14 uses a two-level orthogonal array to select from a plurality of parameters a plurality of effective parameters effective in improving estimated accuracy of an objective variable. Selection unit 14 selects the plurality of effective parameters for example using a method described in Genichi TAGUCHI, "Objective Function and Generic Function (6) - Prediction by T Method", Quality Engineering, 2005, Vol. 13, No. 3, pp. 5-10 (NPL 2). By selecting a plurality of effective parameters using the two-level orthogonal array, which is also referred to as "item selection," for each explanatory variable, which is also referred to as an "item," an explanatory variable effective in improving accuracy of estimating an objective variable can be selected and an explanatory variable having a negative effect on (or reducing) accuracy of estimating the objective variable can be excluded. Furthermore, by using the two-level orthogonal array, an effect when there is an interaction between items can be considered. Specifically, according to Genichi TAGUCHI, "Objective Function and Generic Function (6) - Prediction by T Method", Quality Engineering, 2005, Vol. 13, No. 3, pp. 5-10 (NPL 2), an orthogonal array is created to provide either one of two levels of using and not using for each of a plurality of explanatory variables (or items), and a total SN ratio is calculated for each row of the orthogonal array. Based on a total SN ratio when each item is used and that when it is not used, selection unit 14 determines the item's effect on estimating an objective variable and whether the item has a negative effect on estimating the objective variable. Based on the result of the determination, selection unit 14 selects a plurality of effective parameters from the plurality of parameters.

Alternatively, selection unit 14 may not use the two-level orthogonal array; rather, the selection unit may generate a plurality of patterns each indicating a combination of two or more of the plurality of parameters. Then, selection unit 14 may generate a T-method estimation model in which actual values of the two or more parameters indicated by each pattern are explanatory variables and the first standard SN ratio is an objective variable, and the selection unit may select a plurality of effective parameters based on total SN ratios in magnitude of the generated T-method estimation model. For example, selection unit 14 selects the two or more parameters included in a pattern having a maximum total SN ratio as effective parameters.

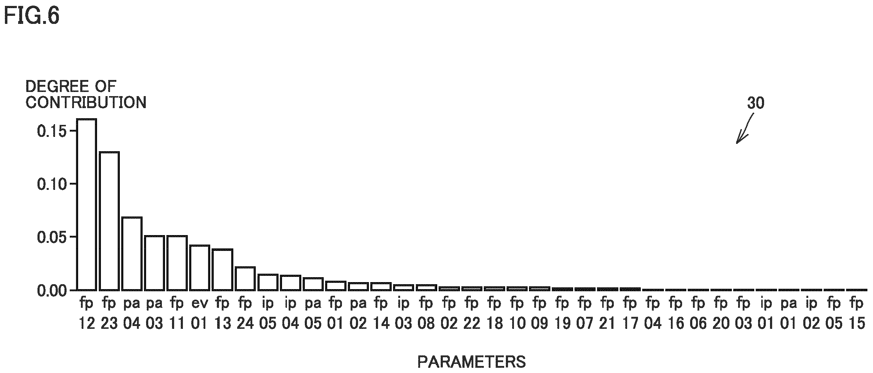

Fig. 6 represents an example of a degree of contribution of each parameter to the first standard SN ratio in the T-method estimation model in which a plurality of parameters are all used. Fig. 6 shows a graph 30 representing a degree of contribution of each of 35 parameters. A parameter having a relatively small degree of contribution has a small degree of influence on the first standard SN ratio. This is because the parameter having a relatively small degree of contribution includes many noise factors. Therefore, it is preferable that the parameter having a relatively small degree of contribution is not selected as an effective parameter.

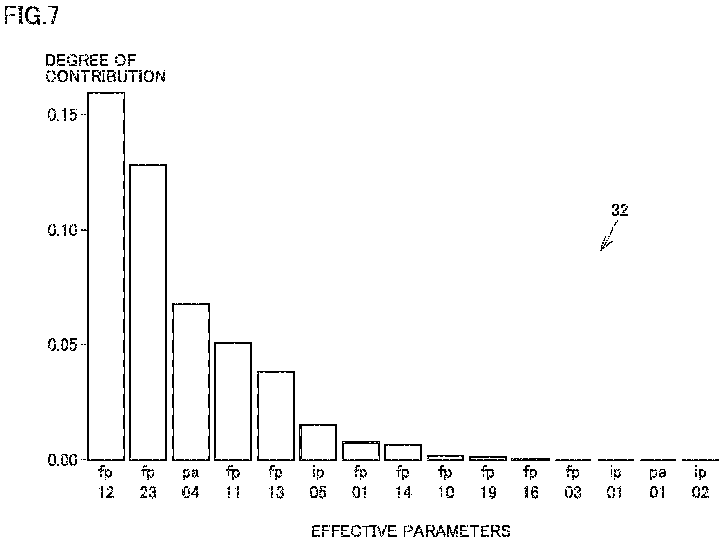

Fig. 7 represents an example of a plurality of effective parameters selected by the selection unit. Fig. 7 shows a graph 32 representing a degree of contribution of each of 15 effective parameters selected using a two-level orthogonal array. In Fig. 7, a vertical axis represents a degree of contribution of each parameter in a T-method estimation model in which the 15 effective parameters are explanatory variables and the first standard SN ratio is the objective variable. The 15 effective parameters have a larger influence on the first standard SN ratio than the remaining parameters do. That is, the 15 effective parameters are occupied by a noise factor at a smaller proportion than the remaining parameters are.

Selection unit 14 provides information on a result of the selection. Specifically, selection unit 14 causes display device 70 to display a screen indicating information on the result of the selection.

Second calculation unit 15 calculates a second standard SN ratio for measured values of the plurality of effective parameters with respect to standard values of the plurality of effective parameters for each unit period of time. The second standard SN ratio is calculated based on Genichi TAGUCHI, "Objective Function and Generic Function (6) - Prediction by T Method", Quality Engineering, 2005, Vol. 13, No. 3, pp. 5-10 (NPL 2). As described above, the plurality of effective parameters selected by selection unit 14 are occupied by a noise factor at a smaller proportion than the remaining parameters are. Therefore, when the second standard SN ratio calculated using the plurality of effective parameters is compared with the first standard SN ratio, the former more accurately represents similarity for a state that press machine 2B has when it normally operates.

Second calculation unit 15 provides a graph representing how the second standard SN ratio changes with time for each unit period of time. Specifically, second calculation unit 15 causes display device 70 to display the graph.

Detection unit 16 detects a predictive anomaly of press machine 2B based on a result of comparing the second standard SN ratio with a control range. The control range is predetermined. Detection unit 16 may detect the predictive anomaly of press machine 2B in response to the second standard SN ratio for each unit period of time departing from the control range. However, it is preferable that detection unit 16 considers variation of the second standard SN ratio and detects the predictive anomaly of press machine 2B in response to the second standard SN ratio having a moving average deviating from the control range.

In response to detection unit 16 detecting a predictive anomaly, analysis unit 17 performs a principal component analysis using the plurality of effective parameters and the second standard SN ratio for each unit period of time and provides a result of the analysis. Specifically, analysis unit 17 causes display device 70 to display a screen indicating the result of the analysis. The result of the analysis is used to identify a cause of the anomaly.

<Flow of Process by Predictive Anomaly Detection Device>

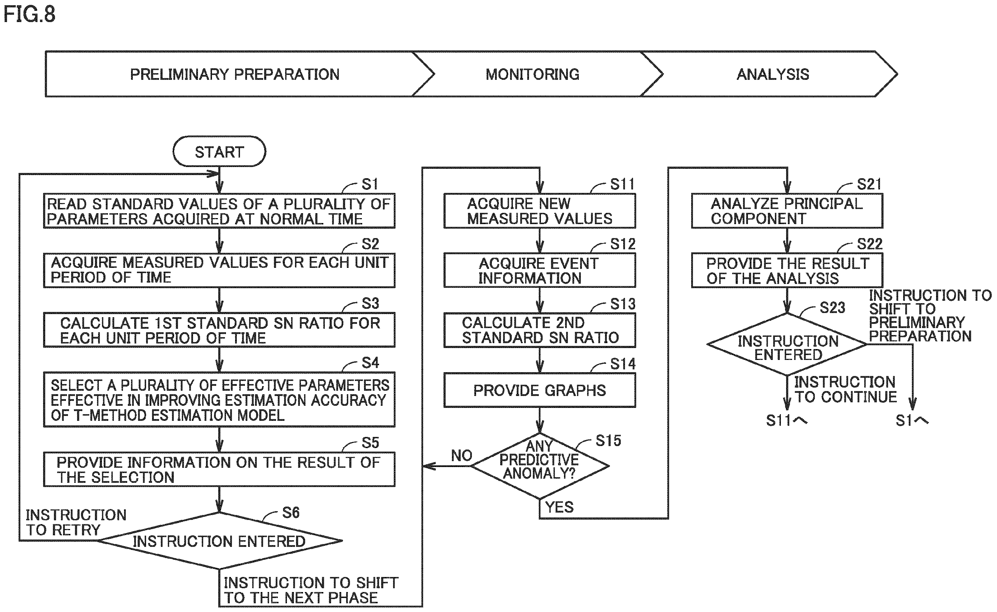

Fig. 8 is a flowchart of an example of a flow of a process performed by the predictive anomaly detection device. As illustrated in Fig. 8, the process by predictive anomaly detection device 100 includes a preliminary preparation phase, a monitoring phase, and an analysis phase.

The preliminary preparation phase is entered during a trial operation period of production system 2 or during a period of time immediately after production system 2 comes into service. Furthermore, the preliminary preparation phase may be entered for a period of time after maintenance of production system 2.

In the preliminary preparation phase, initially, processor 101 of predictive anomaly detection device 100 reads normal data set 10c indicating standard values of a plurality of parameters acquired while press machine 2B to be monitored normally operates (step S1).

Subsequently, processor 101 acquires measured values of the plurality of parameters for each unit period of time (step S2). Specifically, for each record 10a1 of database 10a, processor 101 reads waveform data 10b in a storage location described in the record 10a1 at field 10a3. Processor 101 calculates measured values of the plurality of parameters from the read waveform data 10b.

Subsequently, processor 101 calculates a first standard SN ratio for the measured values of the plurality of parameters with respect to the standard values of the plurality of parameters for each unit period of time (step S3).

Subsequently, processor 101 selects, from the plurality of parameters, a plurality of effective parameters effective in improving estimation accuracy of a T-method estimation model in which the plurality of parameters are explanatory variables and the first standard SN ratio is an objective variable (step S4).

Subsequently, processor 101 provides information on the result of the selection done in step S4 (step S5). The user confirms whether the result of the selection is valid based on the provided information. The information provided in step S5 will more specifically be described hereinafter.

Once the user has determined that the result of the selection is valid, the user enters an instruction to input device 75 to shift to the monitoring phase.

When the user determines that the result of the selection is not valid, the user reviews normal data set 10c, waits until database 10a has data accumulated to a desired amount, or the like. Thereafter, the user enters an instruction to input device 75 to retry the preliminary preparation.

Subsequently, processor 101 confirms the instruction entered to input device 75 (step S6). When the retry instruction is entered to input device 75, the control returns to step S1. When an instruction to shift to the monitoring phase is entered to input device 75, the control proceeds to the monitoring phase.

In the monitoring phase, initially, processor 101 acquires measured values of the plurality of parameters for a new unit period of time (step S11). Specifically, processor 101 reads waveform data 10b in a storage location described in field 10a4 of a new record 10a1 added to database 10a, and calculates the measured values of the plurality of parameters from the read waveform data 10b.

Further, when an event occurs in the new unit period of time, processor 101 acquires event information indicating the type of the event (step S12). Specifically, processor 101 acquires event information indicating a type of an event described in field 10a5 of the new record 10a1 added to database 10a.

Subsequently, processor 101 calculates a second standard SN ratio for measured values of a plurality of effective parameters that are acquired in step S11 with respect to standard values of the plurality of effective parameters (step S13). Further, processor 101 provides a graph representing how the second standard SN ratio changes with time (step S14). Specifically, processor 101 causes display device 70 to display the graph. Thus, the user can confirm how the second standard SN ratio varies.

Subsequently, processor 101 determines whether press machine 2B has a predictive anomaly based on a result of comparing the second standard SN ratio calculated in step S12 with a control range (step S15). Specifically, when the second standard SN ratio has a value (or a moving average) within the control range, processor 101 determines that press machine 2B has no predictive anomaly. When the second standard SN ratio has a value (or a moving average) outside the control range, processor 101 detects that press machine 2B has a predictive anomaly.

When press machine 2B has no predictive anomaly (NO in step S15), the control returns to step S11.

When press machine 2B has a predictive anomaly (YES in step S15), the control proceeds to the analysis phase.

In the analysis phase, processor 101 initially performs a principal component analysis using the plurality of effective parameters and the second standard SN ratio for each unit period of time (step S21). What is subject to the principal component analysis is a data set indicating measured values of the plurality of effective parameters and a value of the second standard SN ratio for each of a plurality of unit period of times included in a target period of time including a timing at which an anomaly is detected.

Subsequently, processor 101 provides a result of the analysis (step S22). Specifically, processor 101 causes display device 70 to display a screen indicating the result of the analysis. The result of the analysis provided in step S22 will more specifically be described hereinafter.

The user identifies a cause of the anomaly based on the result of the analysis. The user performs maintenance for press machine 2B to eliminate the identified cause.

When the maintenance for press machine 2B is performed, the plurality of parameters acquired while press machine 2B normally operates may vary in value. Accordingly, after the maintenance, the user confirms whether a reference space defined by the values of the plurality of parameters acquired while press machine 2B normally operates has a difference from a reference space defined by the standard values of the plurality of parameters currently indicated by normal data set 10c. If the difference is smaller than a threshold value, the user determines that it is unnecessary to change normal data set 10c, and the user enters an instruction to input device 75 to continue the monitoring.

On the other hand, when the difference is equal to or larger than the threshold value, the user determines that it is necessary to change normal data set 10c. Then, the user creates a new normal data set 10c indicating standard values of the plurality of parameters acquired while press machine 2B normally operates, and the user replaces normal data set 10c stored in predictive anomaly detection device 100 with the new normal data set 10c. Thereafter, the user enters an instruction to input device 75 to shift to the preliminary preparation phase.

Subsequently, processor 101 confirms the instruction entered to input device 75 (step S23). When an instruction to continue the monitoring is entered to input device 75, the control returns to step S11. When an instruction to shift to the preliminary preparation phase is entered to input device 75, the control returns to step S1.

<Example of Information on Result of Selection>

The information on the result of the selection provided in step S5 will now be described. Processor 101 provides, as the information on the result of the selection, for example, a scatter diagram of estimated and measured values of an objective variable when a T-method estimation model is used with the plurality of effective parameters as explanatory variables and the first standard SN ratio as the objective variable. Further, in order to confirm that the effective parameters are effective, processor 101 may provide for comparison a scatter diagram of estimated and measured values of an objective variable when a T-method estimation model is used with the plurality of parameters all used as explanatory variables and the first standard SN ratio as the objective variable.

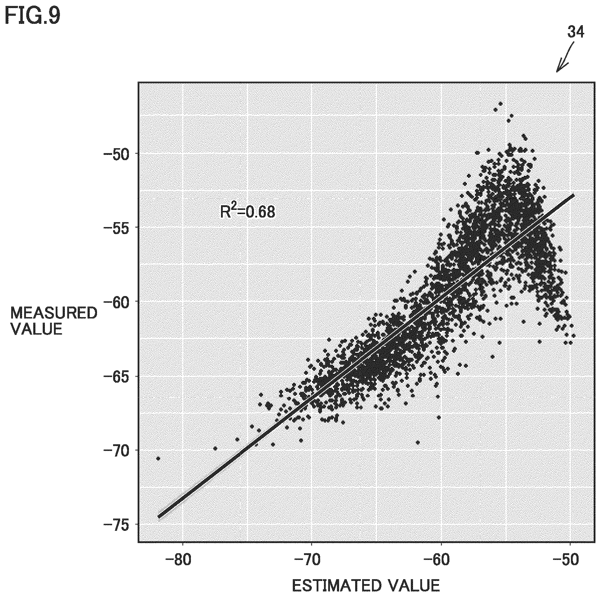

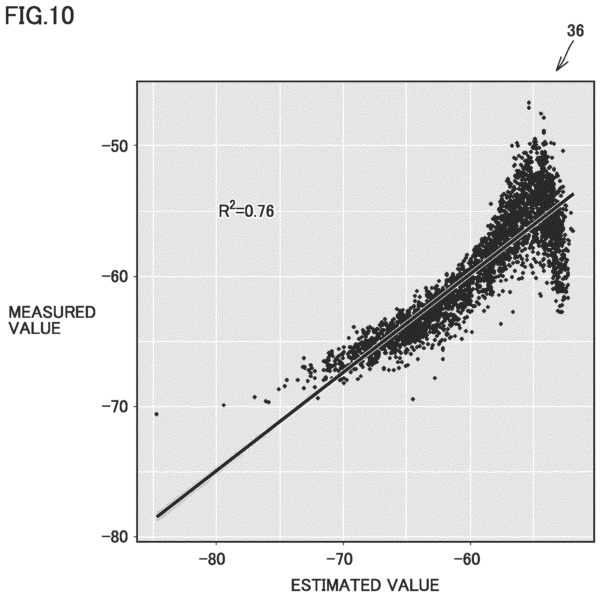

Fig. 9 represents an example of a scatter diagram of estimated and measured values of the objective variable when the T-method estimation model is used with the plurality of parameters all used as explanatory variables and the first standard SN ratio as the objective variable. Fig. 10 represents an example of a scatter diagram of estimated and measured values of the objective variable when the T-method estimation model is used with the plurality of effective parameters as explanatory variables and the first standard SN ratio as the objective variable.

As shown in Figs. 9 and 10, a scatter diagram 36 provided when the plurality of effective parameters are used as explanatory variables has smaller variation than a scatter diagram 34 provided when the plurality of parameters are all used as explanatory variables. This is because the plurality of effective parameters include a noise factor at a smaller proportion than the remaining parameters do. The plurality of effective parameters thus accurately represent similarity for the normal state of press machine 2B.

Further, as shown in Figs. 9 and 10, processor 101 preferably provides a coefficient of determination $R^2$ that represents a degree to which an explanatory variable explains an objective variable. The user can evaluate the estimation accuracy of the T-method estimation model by the coefficient of determination $R^2$.

The user can determine whether the result of the selection is valid by confirming the scatter diagram and the coefficient of determination $R^2$.

Furthermore, processor 101 may provide the Figs. 6 and 7 graphs 30 and 32 as information on the result of the selection. The user can thus obtain each parameter's degree of contribution.

<Advantage of Using Second Standard SN Ratio>

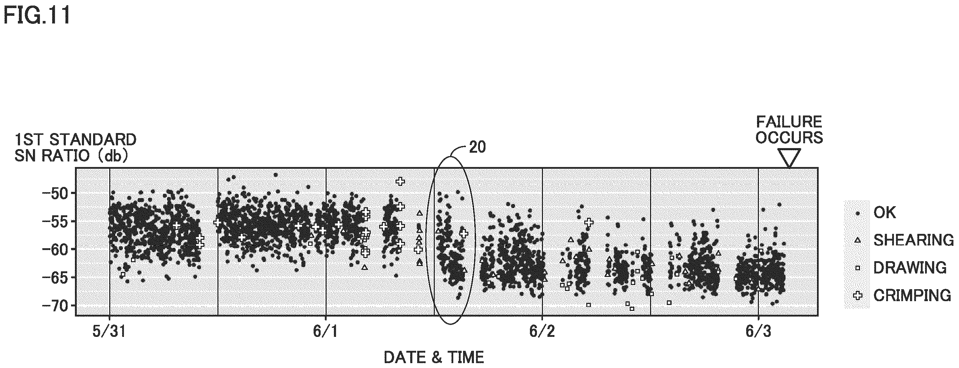

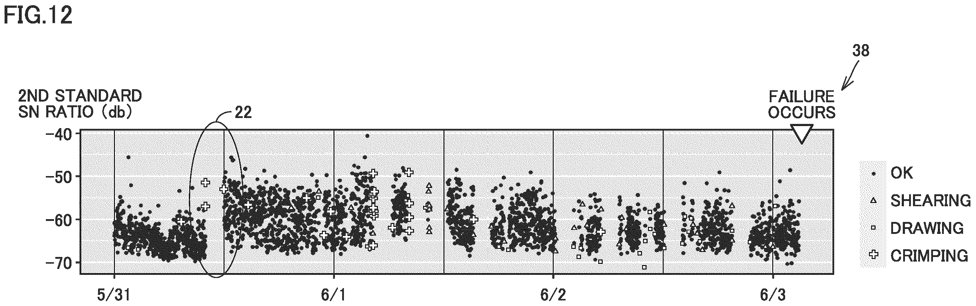

Fig. 11 represents an example of how the first standard SN ratio changes with time. Fig. 12 represents an example of how the second standard SN ratio changes with time. Fig. 11 represents how the first standard SN ratio changes with time for each unit period of time from May 31, 2021 to June 3, 2021. Fig. 12 represents how the second standard SN ratio changes with time for each unit period of time from May 31, 2021 to June 3, 2021.

In Figs. 11 and 12, a point indicating a standard SN ratio for each unit period of time is indicated in a form corresponding to a type of an event occurring for the unit period of time. That is, a point corresponding to a unit period of time for which no event occurs is represented in the form of a circle, a point corresponding to a unit period of time for which an event occurs in the shearing process is represented in the form of a triangle, a point corresponding to a unit period of time for which an event occurs in the drawing process is represented in the form of a square, and a point corresponding to a unit period of time for which an event occurs in the crimping process is represented in the form of a plus sign. As shown in Figs. 11 and 12, a crimping event occurs a plurality of times on May 31, 2021, a crimping event occurs again successively on June 1, 2021, and around the end of the same day, a defect of the crimping process spreads to the drawing process and a drawing event occurs. Thereafter, press machine 2B fails on June 3, 2021.

As shown in Fig. 11 inside an enclosure 20, it can be seen that the first standard SN ratio significantly varies on June 1, which precedes June 3, on which press machine 2B fails. Therefore, even when the first standard SN ratio is used, a predictive anomaly of press machine 2B can be detected to some extent before the failure occurs.

In contrast, as shown in Fig. 12 inside an enclosure 22, it can be seen that the second standard SN ratio significantly varies on May 31, which further precedes June 1. That is, the variation of the second standard SN ratio on May 31 appears as a prediction for the failure on June 3. As described above, using a plurality of effective parameters having a noise factor at a relatively small proportion allows a predictive anomaly of press machine 2B to be detected at an earlier stage.

In step S14, processor 101 operating as second calculation unit 15 causes display device 70 to display graph 38 illustrated in Fig. 12, that is, graph 38 indicating how the second standard SN ratio as calculated for each unit period of time changes with time. Thus, the user can visually recognize how the second standard SN ratio varies.

As shown in Fig. 12, processor 101 indicates in graph 38 indicating how the second standard SN ratio changes with time a type of an event indicated by the event information acquired in step S12. That is, as has been described above, in graph 38, processor 101 causes a form of displaying a point indicating a standard SN ratio for each unit period of time to be different depending on a type of an event indicated by event information for the unit period of time. Thus, the user can identify a type of an event occurring in a time zone in which the second standard SN ratio varies. This helps the user to identify a cause of an anomaly of press machine 2B.

<Example of Result of Analysis>

When an occurrence of an anomaly of press machine 2B is detected, processor 101 selects a target period of time to be subjected to the principal component analysis. Specifically, processor 101 selects a target period of time including a timing at which the occurrence of the anomaly is detected. Specifically, processor 101 selects, as the target period of time, a fixed period of time before the second standard SN ratio starts to vary and a period of time from when the second standard SN ratio starts to vary to the current time.

Processor 101 performs the principal component analysis for measured values of the plurality of effective parameters and a value of the second standard SN ratio for each unit period of time included in the target period of time, and provides a result of the analysis.

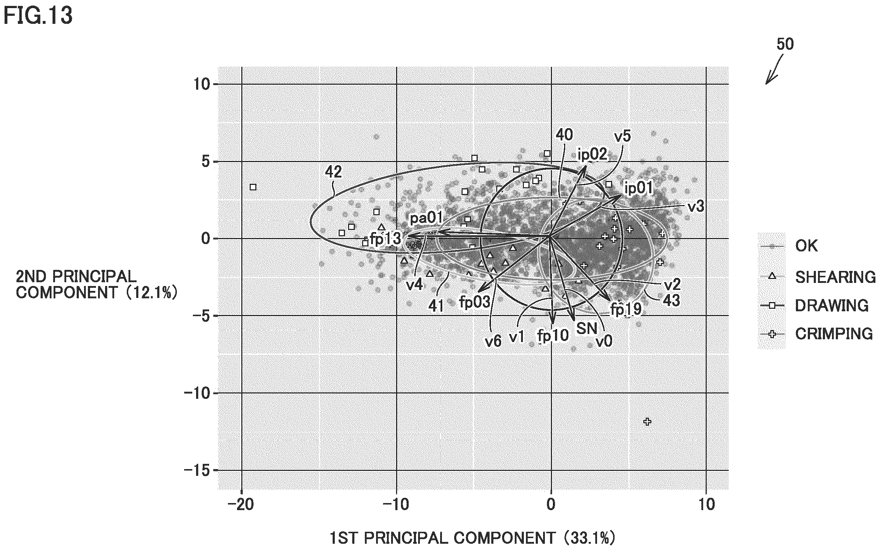

Fig. 13 represents an example of a result of an analysis provided in step S22. Fig. 13 shows a biplot 50 obtained through the principal component analysis. Biplot 50 includes a scatter diagram of principal component scores for a first principal component and a second principal component for each unit period of time included in the target period of time, and a vector superimposed and thus displayed on the scatter diagram and indicating a principal component loading in each of the plurality of effective parameters and the second standard SN ratio. Note that the example shown in Fig. 13 shows a vector v0 corresponding to the second standard SN ratio and vectors v1 to v6 corresponding to some of the plurality of effective parameters, and does not show any vector corresponding to any remaining effective parameter.

Processor 101 may cause a form of displaying each point of the scatter diagram of principal component scores to be different depending on a type of an event occurring in a unit period of time corresponding to the point. In the example shown in Fig. 13, a point corresponding to a unit period of time for which no event occurs is represented in the form of a circle, a point corresponding to a unit period of time for which an event occurs in the shearing process is represented in the form of a triangle, a point corresponding to a unit period of time for which an event occurs in the drawing process is represented in the form of a square, and a point corresponding to a unit period of time for which an event occurs in the crimping process is represented in the form of a plus sign.

In Fig. 13, an enclosure 40 indicates a confidence interval for points corresponding to unit periods of time for which no event occurs. An enclosure 41 indicates a confidence interval for points corresponding to unit periods of time for which an event occurs in the shearing process. An enclosure 42 indicates a confidence interval for points corresponding to unit periods of time for which an event occurs in the drawing process. An enclosure 43 indicates a confidence interval for points corresponding to unit periods of time for which an event occurs in the crimping process. In biplot 50 shown in Fig. 13, it can be seen that the confidence interval for each type of event is separated.

By confirming biplot 50, the user can see which variable affects a decrease in the second standard SN ratio. That is, the user can determine that, of vectors each indicating the principal component loading of one of the plurality of effective parameters, a variable corresponding to a vector having a large component parallel to the vector v0 indicating the principal component loading of the second standard SN ratio is a variable affecting a decrease in the standard SN ratio. For example, in biplot 50 shown in Fig. 13, the user can determine that variables fp10, fp19, fp13, and ip02 corresponding to the vectors v1, v2, v4, and v5 having relatively large components parallel to the direction of the vector v0 are variables affecting a decrease in the second standard SN ratio. On the other hand, the user can determine that variables ip01 and fp03 corresponding to the vectors v3 and v6, respectively, having relatively small components parallel to the direction of the vector v0 are variables which do not significantly affect the decrease in the second standard SN ratio.

Further, the user can estimate that a type of an event corresponding to a confidence interval present in a direction of a vector of a variable affecting a decrease in the second standard SN ratio is relevant to a cause of an anomaly. For example, in the example shown in Fig. 13, the confidence interval indicated by enclosure 43 exists in the direction of the vector v2. This allows the user to refer to a member involved in the crimping process as a candidate for a cause of an anomaly.

The user can determine a cause of an anomaly based on a feature of a vibration waveform represented by a variable affecting a decrease in the second standard SN ratio. For example, when a variable indicating a feature of a high frequency component of a vibration waveform affects a decrease in the second standard SN ratio, the user can refer to a metal component as a candidate for a cause of an anomaly.

< Exemplary Operation >

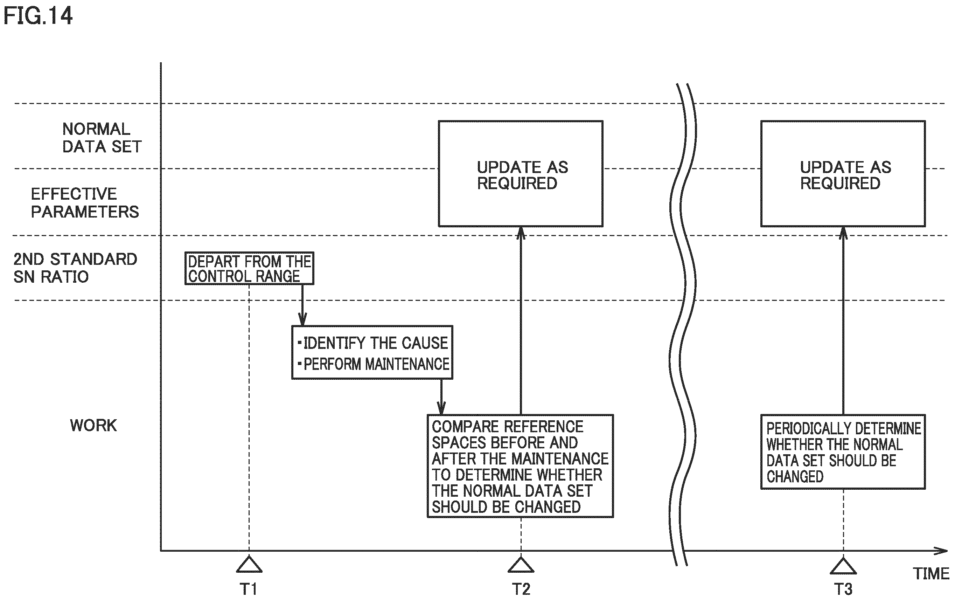

Fig. 14 is a diagram for illustrating an example of operating the predictive anomaly detection device. In Fig. 14, the horizontal axis represents time. In the example illustrated in Fig. 14, at a timing T1, the second standard SN ratio has a moving average departing from the control range, and a predictive anomaly of press machine 2B is detected. In response to the detection of the predictive anomaly, the user identifies a cause of the anomaly based on a result of an analysis, and performs maintenance for press machine 2B.

At a timing T2 when the maintenance is completed, the user determines similarity of reference spaces before and after the maintenance, as defined from values of a plurality of parameters acquired while press machine 2B normally operates. The user determines whether it is necessary to update normal data set 10c according to the similarity between the reference spaces before and after the maintenance. Then, normal data set 10c is updated according to the result of the determination. As normal data set 10c is updated, the preliminary preparation phase indicated in Fig. 8 is performed, and the plurality of effective parameters are also updated.

Further, the necessity of updating normal data set 10c may be periodically determined. For example, at a timing T3, the user acquires values of the plurality of parameters acquired while press machine 2B normally operates. Then, the user determines similarity between a reference space defined by the acquired values of the plurality of parameters and a reference space defined by the standard values of the plurality of parameters indicated by normal data set 10c. The user determines whether to update normal data set 10c depending on the determined similarity, and updates normal data set 10c, as necessary. As normal data set 10c is updated, the preliminary preparation phase indicated in Fig. 8 is performed, and the plurality of effective parameters are also updated.

<First Modification>

In the above description, acquisition unit 12 acquires measured values of a plurality of parameters indicating a state of a target to be monitored for each unit period of time (or each unit interval) having a predetermined time length (e.g., of 1 minute, 5 minutes, 20 minutes, etc.). However, acquisition unit 12 may acquire the measured values of the plurality of parameters indicating the state of the target to be monitored for each unit interval without a predetermined time length. For example, the unit interval may be a period of time for which a target operation is performed in press machine 2B to be monitored. The target operation is, for example, a series of operations of shearing, drawing, and crimping a single metal member. Alternatively, the target operation may be one processing operation selected from shearing, drawing, and crimping a single metal member.

<Second Modification>

For predictive anomaly detection device 100 according to the above embodiment, a target to be monitored for a predictive anomaly is production system 2 (press machine 2B, in particular). However, the target to be monitored is not limited to production system 2.

(Another Example of Target to Be Monitored)

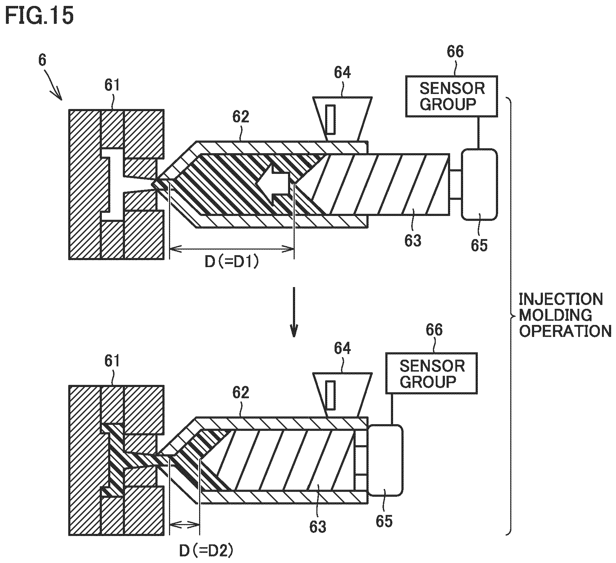

Fig. 15 is a diagram illustrating another example of a target to be monitored. Fig. 15 shows an injection molding machine 6 as a target to be monitored. Injection molding machine 6 includes a mold 61, a cylinder 62, a screw 63, a hopper 64, a screw driving device 65, and a sensor group 66.

Cylinder 62 is a cylindrical member and has an internal space fed with resin. Hopper 64 feeds resin into the internal space of cylinder 62. Screw 63 is inserted into the internal space of cylinder 62. Screw driving device 65 is connected to a proximal end portion of screw 63. Screw 63 rotates as controlled by screw driving device 65 and is movable in the longitudinal direction of cylinder 62. Sensor group 66 measures a variety of types of physical quantities indicating a status of injection molding machine 6.

Injection molding machine 6 repeatedly performs an injection molding operation. The injection molding operation is an operation of injecting the resin accommodated in the internal space of cylinder 62 into mold 61 by moving screw 63 from a state shown in the upper portion of Fig. 15 to a state shown in the lower portion of the same figure.

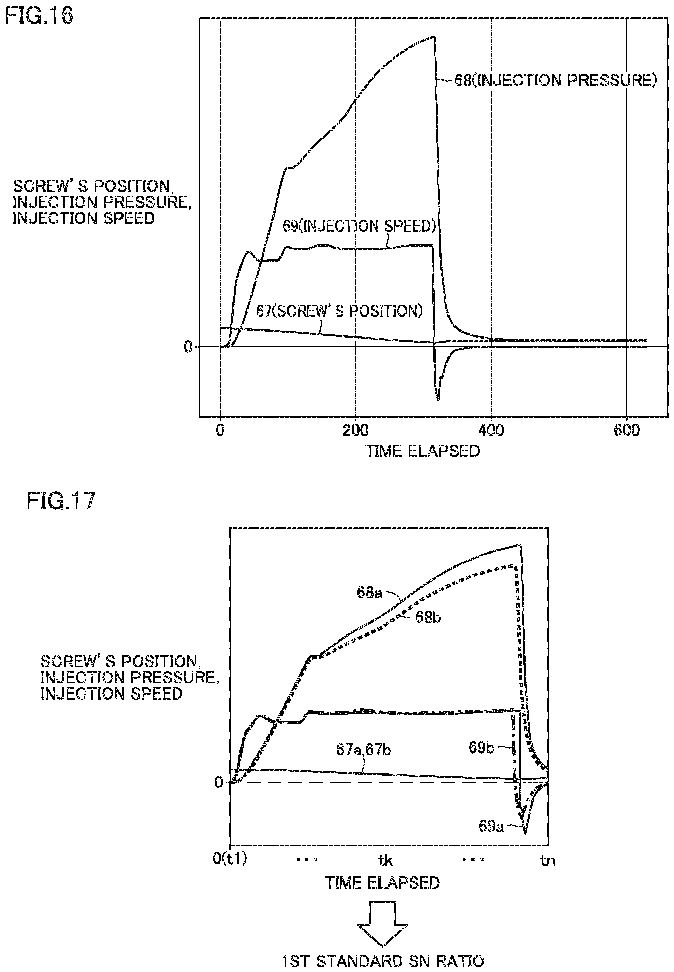

Fig. 16 represents a transition of a physical quantity measured by a sensor group for a period of time for which the injection molding operation is performed. Hereinafter, a period of time for which the injection molding operation is performed will be referred to as an "injection molding period". In the graph shown in Fig. 16, the horizontal axis represents a time elapsing after the injection molding operation starts, and the vertical axis represents values of a variety of types of physical quantities measured by sensor group 66. As shown in Fig. 16, sensor group 66 measures the screw's position, injection pressure, and injection speed as physical quantities indicating a status of injection molding machine 6. The screw's position is represented for example by a distance D between a distal end of cylinder 62 and that of screw 63 (see Fig. 15). In Fig. 16, a line 67 indicates a transition of the screw's position during the injection molding period. Line 68 indicates a transition of the injection pressure. A line 69 indicates a transition of the injection speed.

When a target to be monitored is injection molding machine 6, normal data set 10c indicates standard values of a plurality of parameters indicating a status of injection molding machine 6 during the injection molding period while injection molding machine 6 normally operates. Normal data set 10c is created in advance and stored in storage unit 10. The plurality of parameters include, for example, the screw's position, injection pressure, and injection speed for each of times t1, t2, ..., and tn elapsing after the injection molding operation starts. In that case, the plurality of parameters includes $3 \times n$ parameters.

When the target to be monitored is injection molding machine 6, acquisition unit 12 acquires measured values of the plurality of parameters indicating a status of injection molding machine 6 for each injection molding period. Acquisition unit 12 may acquire the measured values of the plurality of parameters from sensor group 66, or may acquire the measured values of the plurality of parameters from a control device (e.g., a PLC) (not shown) that controls injection molding machine 6.

Fig. 17 represents standard and measured values of the plurality of parameters indicating a status of the injection molding machine. A line 67a represents standard values of the screw's position (n variables) at times t1, t2, ..., tn elapsing after the injection molding period starts. A line 68a represents standard values of injection pressure (n variables) at times t1, t2, ..., tn. A line 69a represents standard values of injection speed (n variables) at times t1, t2, ..., tn. A line 67b represents measured values of the screw's position (n variables) at times t1, t2, ..., tn elapsing after the injection molding period starts. A line 68b represents measured values of injection pressure (n variables) at times t1, t2, ..., tn. A line 69b represents measured values of injection speed (n variables) at times t1, t2, ..., tn.

First calculation unit 13, selection unit 14, second calculation unit 15, detection unit 16, and analysis unit 17 use the standard and measured values of the $3 \times n$ parameters indicated in Fig. 17 to perform the process described in the above embodiment.

Specifically, as illustrated in Fig. 17, first calculation unit 13 calculates a first standard SN ratio as a first statistic indicating the similarity of the measured values of the $3 \times n$ parameters with respect to the standard values of the $3 \times n$ parameters. Selection unit 14 selects from the $3 \times n$ parameters a plurality of effective parameters effective in improving estimation accuracy of a T-method estimation model in which the $3 \times n$ parameters are explanatory variables and the first standard SN ratio is an objective variable. Then, second calculation unit 15 calculates a second standard SN ratio for measured values of the plurality of effective parameters with respect to standard values of the plurality of effective parameters. Detection unit 16 detects a predictive anomaly of injection molding machine 6 based on a result of comparing the second standard SN ratio with a control range. In response to detection unit 16 detecting the predictive anomaly, analysis unit 17 performs a principal component analysis using the plurality of effective parameters and the second standard SN ratio for each injection molding period, and provides a result of the analysis.

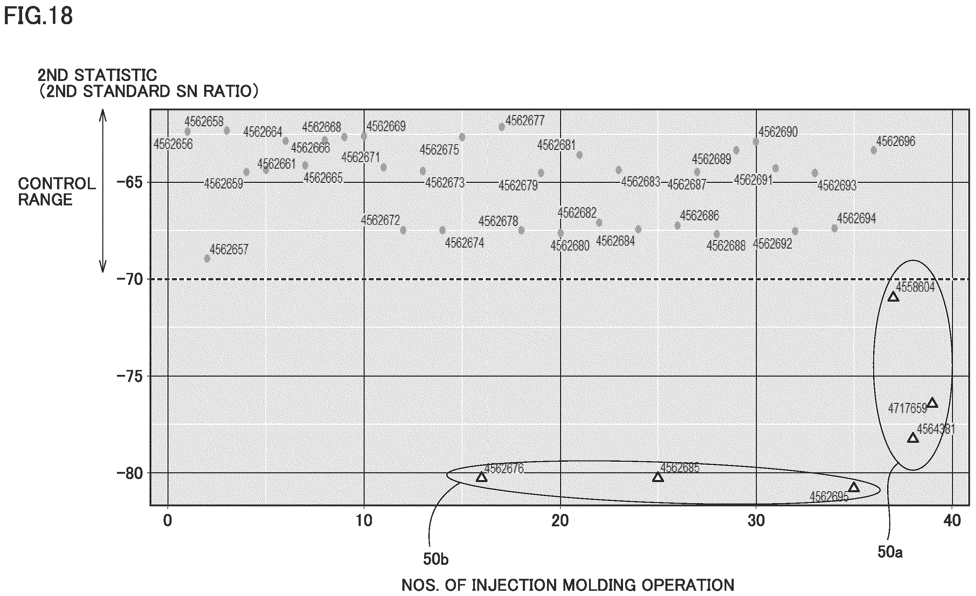

Fig. 18 represents a transition of a second statistic calculated for each injection molding operation. Fig. 18 shows a graph in which the horizontal axis indicates injection molding operation numbers and the vertical axis represents a second statistic (or the second standard SN ratio) calculated by second calculation unit 15. In the graph, 7-digit numbers each corresponding to a point represent numbers of products produced through the injection molding operation. The second standard SN ratios of the points in the regions surrounded by enclosures 50a and 50b depart from the control range. The products manufactured through the injection molding operations corresponding to the points in the region enclosed by enclosure 50a were defective. On the other hand, the products manufactured through the injection molding operations corresponding to the points in the region enclosed by enclosure 50b were non-defective products. The injection molding operations corresponding to the points in the region enclosed by enclosure 50b are performed before the injection molding operations corresponding to the points in the region enclosed by enclosure 50a. This matter allows the user to prevent production of a defective product, based on a predictive anomaly detected by detection unit 16.

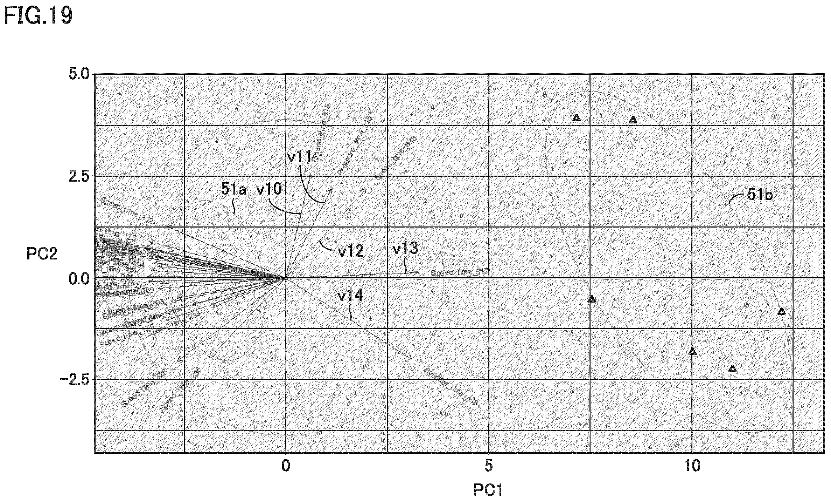

Fig. 19 represents a result of a principal component analysis using the plurality of effective parameters and the second standard SN ratio for each injection molding operation. Fig. 19 shows a biplot of two principal components PC1 and PC2 selected by analysis unit 17. The biplot shown in Fig. 19 plots for each injection molding operation a point corresponding to principal component scores of the two principal components as obtained from measured values of a plurality of variable parameters. Points corresponding to injection molding operations for which the second standard SN ratio falls within the control range concentrate within an enclosure 51a. On the other hand, points corresponding to injection molding operations for which the second standard SN ratio departs from the control range concentrate within an enclosure 51b. From this matter, by confirming the biplot shown in Fig. 19, the user can easily determine an injection molding operation that can cause an anomaly of a product.

Further, by confirming the biplot shown in Fig. 19, the user can consider a mechanism of generating the anomaly. In the biplot shown in Fig. 19, vectors v10, v11, v12, v13, and v14 corresponding to variables "Speed_time_315 (injection speed at elapsed time t315)", "Pressure_time_315 (injection pressure at elapsed time t315)", "Speed_time_316 (injection speed at elapsed time t316)", "Speed_time_317 (injection speed at elapsed time t317)", and "Cylinder_time_318 (the screw's position at elapsed time t318)", respectively, are directed in directions different from those of vectors corresponding to other variables. Therefore, the user can see that the injection speed and screw's position around elapsed times t315 to t318 significantly contribute to an anomaly of injection molding machine 6.

(Still Another Example of Target to Be Monitored)

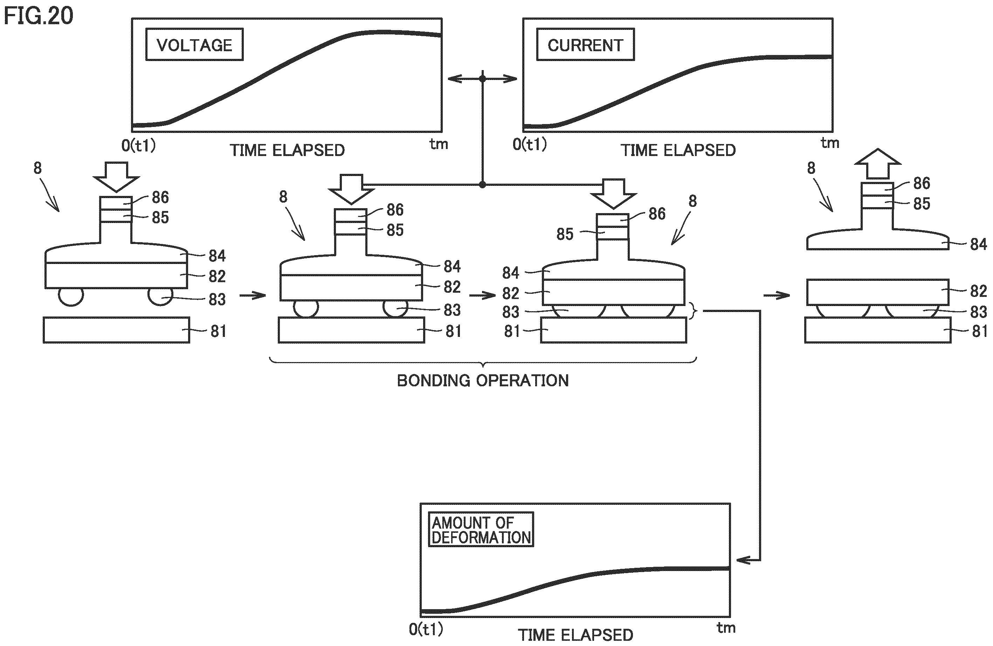

Fig. 20 is a diagram illustrating still another example of a target to be monitored. Fig. 20 shows a mounter 8 as a target to be monitored. Mounter 8 includes a chuck 84, a drive device 85, and a sensor group 86.

Chuck 84 holds a chip 82 having a bump 83 attached thereto. Drive device 85 controls generation of ultrasonic waves, upward/downward movement of chuck 84, and a force exerted by chuck 84 to hold chip 82. Sensor group 86 measures values of a variety of types of physical quantities indicating a status of mounter 8.

As shown in Fig. 20, drive device 85 lowers chuck 84 holding chip 82. When bump 83 comes into contact with a substrate 81, mounter 8 performs a bonding operation to bond bump 83 to substrate 81. Specifically, drive device 85 generates ultrasonic waves to encourage bonding between bump 83 and substrate 81, and further lowers chuck 84 while applying a load. When bump 83 is deformed by a predetermined amount, drive device 85 stops generating ultrasonic waves and reduces the force exerted by chuck 84 to hold chip 82. The bonding operation thus ends. Thereafter, drive device 85 raises chuck 84. Whenever chuck 84 holds a new chip 82, mounter 8 performs the above-described bonding operation.

Sensor group 86 measures a current and a voltage applied to drive device 85 and an amount by which bump 83 is deformed as physical quantities indicating a status of mounter 8. The amount by which bump 83 is deformed is represented by a distance between chip 82 and substrate 81.

When a target to be monitored is mounter 8, normal data set 10c indicates standard values of a plurality of parameters indicating a status of mounter 8 for a bonding operation period while mounter 8 normally operates. Normal data set 10c is created in advance and stored in storage unit 10. The plurality of parameters include, for example, a voltage, a current, and an amount of deformation for each of times t1, t2, ..., and tm elapsing after the bonding operation period starts. In that case, the plurality of parameters includes $3 \times m$ parameters.

When the target to be monitored is mounter 8, acquisition unit 12 acquires measured values of the plurality of parameters indicating a status of mounter 8 for each bonding operation period. Acquisition unit 12 may acquire the measured values of the plurality of parameters from sensor group 86, or may acquire the measured values of the plurality of parameters from a control device (e.g., a PLC) (not shown) that controls mounter 8.

First calculation unit 13, selection unit 14, second calculation unit 15, detection unit 16, and analysis unit 17 use standard and measured values of the $3 \times m$ parameters to perform the process described in the above embodiment.

Specifically, first calculation unit 13 calculates a first standard SN ratio as a first statistic indicating the similarity of the measured values of the $3 \times m$ parameters to the standard values of the $3 \times m$ parameters. Selection unit 14 selects from the $3 \times m$ parameters a plurality of effective parameters effective in improving estimation accuracy of a T-method estimation model in which the $3 \times m$ parameters are explanatory variables and the first standard SN ratio is an objective variable. Then, second calculation unit 15 calculates a second standard SN ratio for measured values of the plurality of effective parameters with respect to standard values of the plurality of effective parameters. Detection unit 16 detects a predictive anomaly of mounter 8 based on a result of comparing the second standard SN ratio with a control range. In response to detection unit 16 detecting the predictive anomaly, analysis unit 17 performs a principal component analysis using the plurality of effective parameters and the second standard SN ratio for each bonding operation period, and provides a result of the analysis.

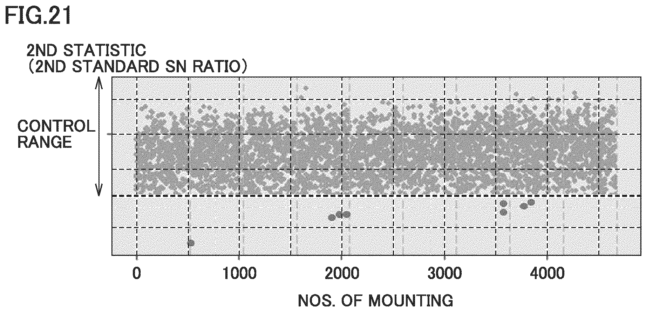

Fig. 21 represents a transition of a second statistic calculated for each bonding operation. Fig. 17 shows a graph in which the horizontal axis indicates bonding operation numbers (or mounting numbers) and the vertical axis represents a second statistic (or the second standard SN ratio) calculated by second calculation unit 15. Some of products manufactured through bonding operations with a second standard SN ratio departing from the control range were defective. This matter allows the user to prevent production of a defective product, based on a predictive anomaly detected by detection unit 16.

(Another Example of Unit Interval)

In the above example, the unit interval is a period of time having a predetermined time length or a period of time for which an operation to be monitored (an injection molding operation or a bonding operation) is performed. However, the unit interval is not limited thereto. For example, the unit interval may be each of a plurality of intervals included in a range that a physical quantity of a manufacturing apparatus can assume.

For example, when a target to be monitored is injection molding machine 6 shown in Fig. 15, the screw's position can assume a range from the position of screw 63 shown in the upper part of Fig. 15 (represented by a distance D1) to the position of screw 63 shown in the lower part of Fig. 15 (represented by a distance D2). In that case, each of a plurality of intervals included in a range from distance D1 to distance D2 is set as a unit interval. For example, an interval for which distance D is D1-D3 and an interval for which distance D is D3-D2 are set as unit intervals.

Alternatively, an interval for which a physical quantity obtained from a tensile tester or a compression tester installed at a production site falls within a specific range may be set as a unit interval. For example, an interval for which a stress-strain diagram presents strain in an amount falling within a predetermined range is set as a unit interval. Alternatively, in a relationship between the cooling rate of a metal heated at a production site and the hardness of the metal, an interval for which the cooling rate falls within a predetermined range may be set as a unit interval.

§ 3. Additional Notes

As discussed above, the present embodiment includes the following disclosure.

(Configuration 1)

A predictive anomaly detection device (100) comprising:

an acquisition unit (101, 12) configured to acquire, for each unit period of time, measured values of a plurality of parameters indicating a state of a production system (2) for the unit period of time;
a first calculation unit (101, 13) configured to calculate a first statistic representing a similarity of the measured values of the plurality of parameters to standard values of the plurality of parameters acquired while the production system normally operates;
a selection unit (101, 14) configured to select, from the plurality of parameters, a plurality of effective parameters effective in improving estimation accuracy of a T-method estimation model in which the plurality of parameters are explanatory variables and the first statistic is an objective variable;
a second calculation unit (101, 15) configured to calculate a second statistic representing a similarity of measured values of the plurality of effective parameters to standard values of the plurality of effective parameters; and
a detection unit (101, 16) configured to detect a predictive anomaly of the production system (2) based on a result of comparing the second statistic with a control range.

(Configuration 2)

A predictive anomaly detection device (100) comprising:

an acquisition unit (101, 12) configured to acquire, for each unit interval, measured values of a plurality of parameters indicating a state of a target to be monitored (2, 2B, 6, 7) in the unit interval;
a first calculation unit (101, 13) configured to calculate a first statistic representing a similarity of the measured values of the plurality of parameters to standard values of the plurality of parameters acquired while the target to be monitored (2, 2B, 6, 7) normally operates;
a selection unit (101, 14) configured to select, from the plurality of parameters, a plurality of effective parameters effective in improving estimation accuracy of a T-method estimation model in which the plurality of parameters are explanatory variables and the first statistic is an objective variable;

a second calculation unit (101, 15) configured to calculate a second statistic representing a similarity of measured values of the plurality of effective parameters to standard values of the plurality of effective parameters; and

a detection unit (101, 16) configured to detect a predictive anomaly of the target to be monitored (2, 2B, 6, 7) based on a result of comparing the second statistic with a control range.

(Configuration 3)

The predictive anomaly detection device (100) according to Configuration 1 or 2, wherein

the acquisition unit (101, 12) is further configured to acquire, for the unit interval (or the unit period of time), event information indicating a type of an event occurring in the target to be monitored (2, 2B, 6, 7) (or the production system (2)) in the unit interval (or the unit period of time), and

the second calculation unit (101, 15) is configured to:

provide a graph (38) representing how the second statistic, as calculated for the unit interval (or the unit period of times), varies with time; and

indicate in the graph (38) a type of an event indicated by the event information for the unit interval (or the unit period of time).

(Configuration 4)

The predictive anomaly detection device (100) according to any one of Configurations 1 to 3, further comprising an analysis unit (101, 17) configured to perform a principal component analysis using the plurality of effective parameters and the second statistic for the unit interval (or the unit period of time) and provide a result of the analysis.

(Configuration 5)

The predictive anomaly detection device (100) according to Configuration 4, wherein

the result of the analysis includes a scatter diagram of principal component scores of a first principal component and a second principal component for the unit interval (or the unit period of time), and

a vector indicating a principal component loading in each of the plurality of effective parameters and the second statistic is superimposed and displayed on the scatter diagram.

(Configuration 6)

The predictive anomaly detection device (100) according to Configuration 5, wherein

the acquisition unit (101, 12) is further configured to acquire event information indicating a type of an event occurring in the target to be monitored (2, 2B, 6, 7) (or the production system (2)) in the unit interval (or the unit period of time), and

the scatter diagram presents a point in a form different depending on a type of an event indicated by the event information of the unit interval (or unit period of time) corresponding to the point.

(Configuration 7)

The predictive anomaly detection device (100) according to any one of Configurations 1 to 6, wherein the selection unit (101, 14) is configured to provide a coefficient of determination for a T-method estimation model in which the plurality of effective parameters are explanatory variables and the second statistic is an objective variable.

(Configuration 8)

The predictive anomaly detection device (100) according to any one of Configurations 1 to 7, wherein the first statistic and the second statistic are each a standard SN ratio.

(Configuration 9)

The predictive anomaly detection device (100) according to any one of Configurations 1 to 8, wherein the unit interval (or the unit period of time) has a predetermined time length.

(Configuration 10)

The predictive anomaly detection device according to any one of Configurations 1 to 8, wherein

the target to be monitored (2, 2B, 6, 7) (or the production system (2)) repeatedly performs a target operation, and the unit interval (or the unit period of time) is a period of time for which the target operation is performed.

(Configuration 11)

The predictive anomaly detection device (100) according to any one of Configurations 1 to 8, wherein

the target to be monitored (or the production system (2)) includes a manufacturing apparatus (2B), and the plurality of parameters are extracted from a waveform of vibration measured by an acceleration sensor (5) installed for the manufacturing apparatus (2B).

(Configuration 12)

A method for detecting a predictive anomaly, comprising:

acquiring, for each unit interval (or each unit period of time), measured values of a plurality of parameters indicating a state of a target to be monitored (2, 2B, 6, 7) (or a production system (2)) in the unit interval (or the unit period of time) (S2, S11);
calculating a first statistic representing a similarity of the measured values of the plurality of parameters to standard values of the plurality of parameters acquired while the target to be monitored (2, 2B, 6, 7) (or the production system (2)) normally operates (S3);
selecting, from the plurality of parameters, a plurality of effective parameters effective in improving estimation accuracy of a T-method estimation model in which the plurality of parameters are explanatory variables and the first statistic is an objective variable (S4);
calculating a second statistic representing a similarity of measured values of the plurality of effective parameters to standard values of the plurality of effective parameters (S13); and
detecting a predictive anomaly of the target to be monitored (2, 2B, 6, 7) (or the production system (2)) based on a result of comparing the second statistic with a control range (S15).

(Configuration 13)

A program configured to cause a computer to perform a method for detecting a predictive anomaly, the method including:

acquiring, for each unit interval (or each unit period of time), measured values of a plurality of parameters indicating a state of a target to be monitored (2, 2B, 6, 7) (or a production system (2)) in the unit interval (or the unit period of time) (S2, S11);
calculating a first statistic representing a similarity of the measured values of the plurality of parameters to standard values of the plurality of parameters acquired while the target to be monitored (2, 2B, 6, 7) (or the production system (2)) normally operates (S3);
selecting, from the plurality of parameters, a plurality of effective parameters effective in improving estimation accuracy of a T-method estimation model in which the plurality of parameters are explanatory variables and the first statistic is an objective variable (S4);
calculating a second statistic representing a similarity of measured values of the plurality of effective parameters to standard values of the plurality of effective parameters (S13); and
detecting a predictive anomaly of the target to be monitored (2, 2B, 6, 7) (or the production system (2)) based on a result of comparing the second statistic with a control range (S15).

While embodiments of the present invention have been described, it should be understood that the embodiments disclosed herein are illustrative and non-restrictive in any respect. The scope of the present invention is defined by the terms of the claims, and is intended to encompass any modification equivalent in meaning and scope to the terms of the claims.

REFERENCE SIGNS LIST

1 system, 2 production system, 2A member feeding device, 2B press machine, 2C inspection device, 5 acceleration sensor, 6 injection molding machine, 7 mounter, 10 storage, 10a database, 10a1 record, 10a2 to 10a4 field, 10b waveform data, 10c normal data set, 11 database construction unit, 12 acquisition unit, 13 first calculation unit, 14 selection unit, 15 second calculation unit, 16 detection unit, 17 analysis unit, 30, 32, 38 graph, 34, 36 scatter diagram, 50 biplot, 61 mold, 62 cylinder, 63 screw, 64 hopper, 65 screw driving device, 66, 86 sensor group, 70 display device, 75 input device, 81 substrate, 82 chip, 83 bump, 84 chuck, 85 drive device, 100 predictive anomaly detection device, 101 processor, 102 memory, 103 storage, 104 display controller, 105 input interface, 106 amplifier, 107 communication interface, 131 detection program, 132 data accumulation program.

**Claims**

1. A predictive anomaly detection device comprising:

    an acquisition unit configured to acquire, for each unit interval, measured values of a plurality of parameters indicating a state of a target to be monitored in the unit interval;
    a first calculation unit configured to calculate a first statistic representing a similarity of the measured values of the plurality of parameters to standard values of the plurality of parameters acquired while the target to be monitored normally operates;
    a selection unit configured to select, from the plurality of parameters, a plurality of effective parameters effective in improving estimation accuracy of a T-method estimation model in which the plurality of parameters are explanatory variables and the first statistic is an objective variable;
    a second calculation unit configured to calculate a second statistic representing a similarity of measured values of the plurality of effective parameters to standard values of the plurality of effective parameters; and
    a detection unit configured to detect a predictive anomaly of the target to be monitored based on a result of comparing the second statistic with a control range.

2. The predictive anomaly detection device according to claim 1, wherein

    the acquisition unit is further configured to acquire, for the unit interval, event information indicating a type of an event occurring in the target to be monitored in the unit interval, and
    the second calculation unit is configured to:

        provide a graph representing how the second statistic, as calculated for the unit interval, varies with time; and
        indicate in the graph a type of an event indicated by the event information for the unit interval.

3. The predictive anomaly detection device according to claim 1, further comprising an analysis unit configured to perform a principal component analysis using the plurality of effective parameters and the second statistic for the unit interval and provide a result of the analysis.

4. The predictive anomaly detection device according to claim 3, wherein

    the result of the analysis includes a scatter diagram of principal component scores of a first principal component and a second principal component for the unit interval, and
    a vector indicating a principal component loading in each of the plurality of effective parameters and the second statistic is superimposed and displayed on the scatter diagram.

5. The predictive anomaly detection device according to claim 4, wherein

    the acquisition unit is further configured to acquire event information indicating a type of an event occurring in the target to be monitored in the unit interval, and
    the scatter diagram presents a point in a form different depending on a type of an event indicated by the event information of the unit interval corresponding to the point.

6. The predictive anomaly detection device according to claim 1, wherein the selection unit is configured to provide a coefficient of determination for a T-method estimation model in which the plurality of effective parameters are explanatory variables and the second statistic is an objective variable.

7. The predictive anomaly detection device according to claim 1, wherein the first statistic and the second statistic are each a standard SN ratio.

8. The predictive anomaly detection device according to any one of claims 1 to 7, wherein the unit interval has a predetermined time length.

9. The predictive anomaly detection device according to any one of claims 1 to 7, wherein

the target to be monitored repeatedly performs a target operation, and
the unit interval is a period of time for which the target operation is performed.

10. The predictive anomaly detection device according to any one of claims 1 to 7, wherein

the target to be monitored includes a manufacturing apparatus, and
the plurality of parameters are extracted from a waveform of vibration measured by an acceleration sensor installed for the manufacturing apparatus.

11. A method for detecting a predictive anomaly, comprising:

acquiring, for each unit interval, measured values of a plurality of parameters indicating a state of a target to be monitored in the unit interval;
calculating a first statistic representing a similarity of the measured values of the plurality of parameters to standard values of the plurality of parameters acquired while the target to be monitored normally operates;
selecting, from the plurality of parameters, a plurality of effective parameters effective in improving estimation accuracy of a T-method estimation model in which the plurality of parameters are explanatory variables and the first statistic is an objective variable;
calculating a second statistic representing a similarity of measured values of the plurality of effective parameters to standard values of the plurality of effective parameters; and
detecting a predictive anomaly of the target to be monitored based on a result of comparing the second statistic with a control range.

12. A program configured to cause a computer to perform a method for detecting a predictive anomaly, the method including:

acquiring, for each unit interval, measured values of a plurality of parameters indicating a state of a target to be monitored in the unit interval;
calculating a first statistic representing a similarity of the measured values of the plurality of parameters to standard values of the plurality of parameters acquired while the target to be monitored normally operates;
selecting, from the plurality of parameters, a plurality of effective parameters effective in improving estimation accuracy of a T-method estimation model in which the plurality of parameters are explanatory variables and the first statistic is an objective variable;
calculating a second statistic representing a similarity of measured values of the plurality of effective parameters to standard values of the plurality of effective parameters; and
detecting a predictive anomaly of the target to be monitored based on a result of comparing the second statistic with a control range.

FIG.1

PRODUCTION SYSTEM $\sim 2$

DATA AT NORMAL TIME

(1) COLLECT MEASURED VALUES OF A PLURALITY OF PARAMETERS

| PARAMETERS | STANDARD VALUES |
|---|---|
| A | 1 |
| B | 2 |
| ⋮ | ⋮ |

| PARAMETERS | MEASURED VALUES |
|---|---|
| A | 1.1 |
| B | 1.9 |
| ⋮ | ⋮ |

(2) CALCULATE 1ST STATISTIC (OR 1ST STANDARD SN RATIO)

OBJECTIVE VARIABLE     EXPLANATORY VARIABLE

(3) SELECT EFFECTIVE PARAMETERS EFFECTIVE IN IMPROVING ESTIMATION ACCURACY OF T-METHOD ESTIMATION MODEL

| EFFECTIVE PARAMETERS | STANDARD VALUES |
|---|---|
| B | 2 |
| ⋮ | ⋮ |

| EFFECTIVE PARAMETERS | MEASURED VALUES |
|---|---|
| B | 1.9 |
| ⋮ | ⋮ |

(4) CALCULATE 2ND STATISTIC (OR 2ND STANDARD SN RATIO)

MOVING AVERAGE OF 2ND STATISTIC

CONTROL RANGE

TIME

(5) DETECT PREDICTIVE ANOMALY

FIG.2

2A — MEMBER FEEDING DEVICE

2 (system)

2B — PRESS MACHINE

- SHEARING
- DRAWING
- CRIMPING

5

100 — PREDICTIVE ANOMALY DETECTION DEVICE

1

2C — INSPECTION DEVICE

FIG.3

## FIG.4

PREDICTIVE ANOMALY DETECTION DEVICE — 100

- 11 DATABASE CONSTRUCTION UNIT
- 12 ACQUISITION UNIT
- 13 1ST CALCULATION UNIT
- 14 SELECTION UNIT
- 15 2ND CALCULATION UNIT
- 16 DETECTION UNIT
- 17 ANALYSIS UNIT

STORAGE — 10
- 10a DATABASE
- 10b WAVEFORM DATA
- 10c NORMAL DATA SET

FIG.5

| START TIME | START TIME | WAVEFORM DATA | EVENT TYPE |
|---|---|---|---|
| 2021/05/30 10:00:00 | 2021/05/30 10:20:00 | ¥aa¥bb¥cc01 | null |
| 2021/05/30 10:20:00 | 2021/05/30 10:40:00 | ¥aa¥bb¥cc02 | CRIMPING |
| ⋮ | ⋮ | ⋮ | ⋮ |

10a

10a1

10a1

10a2  10a3  10a4  10a5

FIG.6

EP 4 535 110 A1

FIG.7

DEGREE OF
CONTRIBUTION

EFFECTIVE PARAMETERS

EP 4 535 110 A1

FIG.8

| PRELIMINARY PREPARATION | MONITORING | ANALYSIS |

**START**

S1 — READ STANDARD VALUES OF A PLURALITY OF PARAMETERS ACQUIRED AT NORMAL TIME

S2 — ACQUIRE MEASURED VALUES FOR EACH UNIT PERIOD OF TIME

S3 — CALCULATE 1ST STANDARD SN RATIO FOR EACH UNIT PERIOD OF TIME

S4 — SELECT A PLURALITY OF EFFECTIVE PARAMETERS EFFECTIVE IN IMPROVING ESTIMATION ACCURACY OF T-METHOD ESTIMATION MODEL

S5 — PROVIDE INFORMATION ON THE RESULT OF THE SELECTION

S6 — INSTRUCTION ENTERED

INSTRUCTION TO RETRY

INSTRUCTION TO SHIFT TO THE NEXT PHASE

S11 — ACQUIRE NEW MEASURED VALUES

S12 — ACQUIRE EVENT INFORMATION

S13 — CALCULATE 2ND STANDARD SN RATIO

S14 — PROVIDE GRAPHS

S15 — ANY PREDICTIVE ANOMALY?

NO

YES

S21 — ANALYZE PRINCIPAL COMPONENT

S22 — PROVIDE THE RESULT OF THE ANALYSIS

S23 — INSTRUCTION ENTERED

INSTRUCTION TO SHIFT TO PRELIMINARY PREPARATION

INSTRUCTION TO CONTINUE

S11

S1

EP 4 535 110 A1

FIG.9

FIG.10

FIG.11

FIG.12

FIG.13

50

2ND PRINCIPAL
COMPONENT (12.1%)

1ST PRINCIPAL COMPONENT (33.1%)

OK
SHEARING
DRAWING
CRIMPING

EP 4 535 110 A1

FIG.14

NORMAL
DATA SET

EFFECTIVE
PARAMETERS

UPDATE AS
REQUIRED

UPDATE AS
REQUIRED

2ND STANDARD
SN RATIO

DEPART FROM THE
CONTROL RANGE

- IDENTIFY THE CAUSE
- PERFORM MAINTENANCE

WORK

COMPARE REFERENCE
SPACES BEFORE AND
AFTER THE MAINTENANCE
TO DETERMINE WHETHER
THE NORMAL DATA SET
SHOULD BE CHANGED

PERIODICALLY DETERMINE
WHETHER THE NORMAL
DATA SET SHOULD BE
CHANGED

T1

T2

T3

TIME

EP 4 535 110 A1

FIG.15

FIG.16

SCREW' S POSITION,
INJECTION PRESSURE,
INJECTION SPEED

68(INJECTION PRESSURE)

69(INJECTION SPEED)

67(SCREW' S POSITION)

0

0          200          400          600

TIME ELAPSED

FIG.17

SCREW' S POSITION,
INJECTION PRESSURE,
INJECTION SPEED

68a
68b

67a,67b          69b

0

69a

0(t1)     · · ·     tk     · · ·     tn

TIME ELAPSED

⇩

1ST STANDARD SN RATIO

35

FIG.18

FIG.19

EP 4 535 110 A1

FIG.20

VOLTAGE — TIME ELAPSED 0(t1) ... tm

CURRENT — TIME ELAPSED 0(t1) ... tm

BONDING OPERATION

AMOUNT OF DEFORMATION — TIME ELAPSED 0(t1) ... tm

# FIG.21

2ND STATISTIC
(2ND STANDARD SN RATIO)

CONTROL
RANGE

NOS. OF MOUNTING

## INTERNATIONAL SEARCH REPORT

| International application No. |
|---|
| **PCT/JP2023/017280** |

### A. CLASSIFICATION OF SUBJECT MATTER

*G05B 23/02*(2006.01)i
FI:  G05B23/02 302S

According to International Patent Classification (IPC) or to both national classification and IPC

### B. FIELDS SEARCHED

Minimum documentation searched (classification system followed by classification symbols)

G05B23/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2019-57164 A (MITSUBISHI HITACHI POWER SYS) 11 April 2019 (2019-04-11) paragraphs [0023]-[0043], fig. 1-4 | 1-12 |
| Y | JP 2017-187880 A (RICOH CO LTD) 12 October 2017 (2017-10-12) paragraphs [0077]-[0083] | 1-12 |
| Y | JP 2001-67117 A (TOSHIBA CORP) 16 March 2001 (2001-03-16) paragraphs [0019]-[0022] | 3-5 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **15 June 2023** | **27 June 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

| International application No. |
| --- |
| **PCT/JP2023/017280** |

| Patent document cited in search report | | | Publication date (day/month/year) | Patent family member(s) | Publication date (day/month/year) |
| --- | --- | --- | --- | --- | --- |
| JP | 2019-57164 | A | 11 April 2019 | (Family: none) | |
| JP | 2017-187880 | A | 12 October 2017 | (Family: none) | |
| JP | 2001-67117 | A | 16 March 2001 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2019177783 A

**Non-patent literature cited in the description**

• MT system capable of determining directions - TS method and T method. **KISHIO TAMURA**. Standardization and Quality Control. 2009, vol. 62
• **GENICHI TAGUCHI**. Objective Function and Generic Function (6) - Prediction by T Method. *Quality Engineering*, 2005, vol. 13 (3), 5-10

• *Idea and Utilization of Quality Engineering in Development and Design Phase - Prototypeless and Testless System Evaluation and Improvement*, 22 March 2023, https://foundry.jp/bukai/wp-content/uploads/2012/07/e4806f10b0797ec0932d9317d-d92a533.pdf
• *Idea and Utilization of Quality Engineering in Development and Design Phase - Prototypeless and Testless System Evaluation and Improvement*, 04 January 2022, https://foundry.jp/bukai/wp-content/uploads/2012/07/e4806f10b0797ec0932d9317d-d92a533.pdf